# EUROPEAN PATENT APPLICATION

(11) **EP 4 489 500 A1**
(43) Date of publication of application: **08.01.2025**
(21) Application number: 22928740.4
(22) Date of filing: 28.02.2022
(51) Int. Cl.: H04W 72/23, H04W 28/14, H04W 84/12

(54) **BASE STATION AND WIRELESS TERMINAL DEVICE**

(71) Applicant: Nippon Telegraph And Telephone Corporation, Chiyoda-ku Tokyo 100-8116 (JP)
(72) Inventor: KISHIDA, Akira, Musashino-shi, Tokyo 180-8585 (JP); NAGATA, Kengo, Musashino-shi, Tokyo 180-8585 (JP); SHINOHARA, Shoko, Musashino-shi, Tokyo 180-8585 (JP); OTANI, Hanae, Musashino-shi, Tokyo 180-8585 (JP); ASAI, Yusuke, Musashino-shi, Tokyo 180-8585 (JP); TAKATORI, Yasushi, Musashino-shi, Tokyo 180-8585 (JP)
(74) Representative: Nederlandsch Octrooibureau
(86) International application number: PCT/JP2022/008244
(87) International publication number: WO 2023/162214

(57) **Abstract**

A base station of the embodiment includes a first wireless signal processing unit and a link management unit. The link management unit establishes a link with a first wireless terminal apparatus by using a first wireless signal processing unit. The link management unit causes the first wireless signal processing unit to radiate a wireless signal including a trigger frame in a first cycle. The link management unit, in response to a first trigger frame included in a set of the trigger frames radiated in the first cycle, receives first uplink data and information of a first queue delay time of the first uplink data from the first wireless terminal apparatus, and changes a cycle for causing the first wireless signal processing unit to radiate a wireless signal including the trigger frame from a first cycle to a second cycle shorter than the first cycle in a case where the first queue delay time exceeds the first threshold.

## Description

### Technical Field

Embodiments described herein relate to a base station and a wireless terminal apparatus.

### Background Art

A wireless local area network (LAN) is known as an information communication system that wirelessly connects a base station to a wireless terminal apparatus.

### Citation List

### Non Patent Literature

Non Patent Literature 1: IEEE Std 802.11TM-2020, "10.47 Target wake time (TWT)", published 26 February 2021

### Summary of Invention

### Technical Problem

A problem is to curb a queue delay of low latency data transmitted on an uplink.

### Solution to Problem

A base station of the embodiment includes a first wireless signal processing unit and a link management unit. The link management unit establishes a link with a first wireless terminal apparatus by using a first wireless signal processing unit. The link management unit causes the first wireless signal processing unit to radiate a wireless signal including a trigger frame in a first cycle. The link management unit, in response to a first trigger frame included in a set of the trigger frames radiated in the first cycle, receives first uplink data and information of a first queue delay time of the first uplink data from the first wireless terminal apparatus, and changes a cycle for causing the first wireless signal processing unit to radiate a wireless signal including the trigger frame from the first period to a second period shorter than the first period in a case where the first queue delay time exceeds the first threshold.

### Advantageous Effects of Invention

The base station of the embodiment can curb a delay of data transmitted on the uplink.

### Brief Description of Drawings

Fig. 1 is a conceptual diagram illustrating one example of an overall configuration of an information communication system according to a first embodiment.
Fig. 2 is a conceptual diagram illustrating one example of a frequency band used for wireless communication in the information communication system according to the first embodiment.
Fig. 3 is a block diagram illustrating one example of a hardware configuration of a base station included in the information communication system according to the first embodiment.
Fig. 4 is a block diagram illustrating one example of a hardware configuration of a wireless terminal apparatus included in the information communication system according to the first embodiment.
Fig. 5 is a block diagram illustrating one example of a functional configuration of the base station included in the information communication system according to the first embodiment.
Fig. 6 is a block diagram illustrating one example of a functional configuration of a MAC frame processing unit of the base station included in the information communication system according to the first embodiment.
Fig. 7 is a block diagram illustrating one example of a functional configuration of the wireless terminal apparatus included in the information communication system according to the first embodiment.
Fig. 8 is a block diagram illustrating one example of a functional configuration of the MAC frame processing unit of the base station included in the information communication system according to the first embodiment.
Fig. 9 is a sequence diagram illustrating an outline of an uplink data transmission method when the target wake time (TWT) function is used in the information communication system according to the first embodiment.
Fig. 10 is a conceptual diagram illustrating one example of a format of a trigger frame transmitted during a TWT service period of the information communication system according to the first embodiment.
Fig. 11 is a conceptual diagram illustrating one example of a format of a beacon signal including a TWT setting used in the information communication system according to the first embodiment.
Fig. 12 is a flowchart illustrating one example of a method of updating the TWT setting in the information communication system according to the first embodiment.
Fig. 13 is a sequence diagram illustrating a specific example of a method of updating the TWT setting in the information communication system according to the first embodiment.
Fig. 14 is a sequence diagram illustrating a specific example of a method of updating the TWT setting in an information communication system according to a modification of the first embodiment.
Fig. 15 is a flowchart illustrating one example of a method of updating the TWT setting in an information communication system according to a second embodiment.
Fig. 16 is a table illustrating a change example of the TWT setting in the information communication system according to the second embodiment.
Fig. 17 is a timing chart illustrating one example of an uplink data transmission method before and after the change of the TWT setting in the information communication system according to the second embodiment.
Fig. 18 is a flowchart illustrating one example of a method of updating the TWT setting in an information communication system according to a third embodiment.
Fig. 19 is a table illustrating a change example of the TWT setting in the information communication system according to the third embodiment.
Fig. 20 is a timing chart illustrating one example of the uplink data transmission method before and after the change of the TWT setting in the information communication system according to the third embodiment.
Fig. 21 is a table illustrating one example of a link state of a base station and a wireless terminal apparatus included in an information communication system according to a fourth embodiment.
Fig. 22 is a flowchart illustrating one example of a multilink setup method in the information communication system according to the fourth embodiment.
Fig. 23 is a table illustrating one example of the TWT setting in the information communication system according to the fourth embodiment.
Fig. 24 is a table illustrating one example of channel allocation of each TWT group in the information communication system according to the fourth embodiment.
Fig. 25 is a timing chart illustrating one example of the uplink data transmission method based on the TWT setting in the information communication system according to the fourth embodiment.

### Description of Embodiments

Hereinafter, an information communication system according to embodiments will be described with reference to the drawings. Each embodiment exemplifies a device and a method of embodying the technical idea of the invention. The drawings are schematic or conceptual. In the following description, constituent elements having substantially the same function and configuration are denoted by the same reference numerals. Numbers or the like following characters in reference numerals are used to distinguish between elements referred to by reference numerals including the same characters and having similar configurations. Where elements denoted by reference numerals containing the same characters do not need to be distinguished from one another, these elements are referred to by reference numerals containing only characters.

### <1> First embodiment

Hereinafter, an information communication system 1 according to a first embodiment will be described.

### <1-1> Configuration

### <1-1-1> Overall configuration

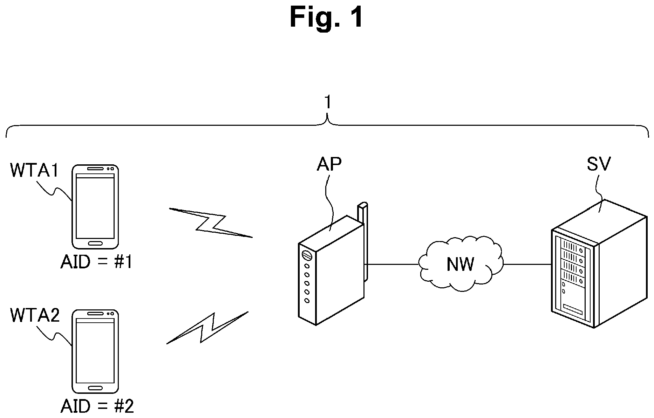

Fig. 1 is a conceptual diagram illustrating one example of an overall configuration of the information communication system 1 according to the first embodiment. As illustrated in Fig. 1, the information communication system 1 includes, for example, a base station (access point) AP, at least one wireless terminal apparatus WTA, and a server SV.

The base station AP is a wireless LAN access point or a wireless LAN router. The base station AP is configured to be connectable to a network NW. The base station AP is configured to be wirelessly connectable to one or more wireless terminal apparatuses WTA by using one type or a plurality of types of bands.

The wireless terminal apparatus WTA is a wireless terminal such as a smartphone or a tablet computer. The wireless terminal apparatus WTA is configured to be connectable to the base station AP that has established a link. The wireless terminal apparatus WTA may be an electronic apparatus such as a desktop computer or a laptop computer. A terminal identifier AID is added to the wireless terminal apparatus WTA. The base station AP can identify a plurality of wirelessly-connected wireless terminal apparatuses WTA by the terminal identifier AID. In the present example, a wireless terminal apparatus WTA1 having an AID = #1 and a wireless terminal apparatus WTA2 having an AID = #2 are connected to the base station AP.

The server SV is a computer configured to be connectable to the network NW. The server SV is configured to be able to communicate with the base station AP via the network NW. The server SV stores, for example, data of content for which the wireless terminal apparatus WTA is a target. The server SV can transmit and receive data to and from the wireless terminal apparatus WTA via the base station AP. Communication between the base station AP and the server SV may be wireless communication or may be a combination of wireless communication and wired communication.

The wireless communication between the base station AP and the wireless terminal apparatus WTA conforms to the IEEE 802.11 standard. In the IEEE 802.11 standard, the MAC sublayers of the first layer and the second layer of the open systems interconnection (OSI) reference model are specified. In the OSI reference model, a communication function is divided into seven layers (first layer: physical layer, second layer: data link layer, third layer: network layer, fourth layer: transport layer, fifth layer: session layer, sixth layer: presentation layer, and seventh layer: application layer). The second layer (data link layer) includes the logical link control (LLC) sublayer and the media access control (MAC) sublayer. An outline of each of the LLC sublayer and the MAC sublayer will be described later.

In addition, the base station AP can use a target wake time (TWT) function for communication with the wireless terminal apparatus WTA. When the TWT function is used, a certain cycle is set between the base station AP and the wireless terminal apparatus WTA, and the base station AP gives a transmission opportunity to the wireless terminal apparatus WTA every certain cycle. The wireless terminal apparatus WTA can curb power consumption by setting a period other than the certain cycle set by the TWT function to a power saving state. In the TWT function, a period (hereinafter also referred to as a TWT service period) during which the base station AP gives a transmission opportunity to the wireless terminal apparatus WTA is set to be short in a case where curbing of power consumption is prioritized, and is set to be long in a case where improvement of latency is prioritized, for example. In addition, the wireless terminal apparatus WTA can improve latency of data (hereinafter referred to as low latency data) requested to have a low delay by preferentially transmitting the low latency data in the TWT service period. The TWT function in the first embodiment executes processing for further curbing a delay in transmission of uplink data from the wireless terminal apparatus WTA to the base station AP. A detailed operation of the TWT function in the embodiment will be described later.

### (Frequency band used by base station AP and wireless terminal apparatus WTA)

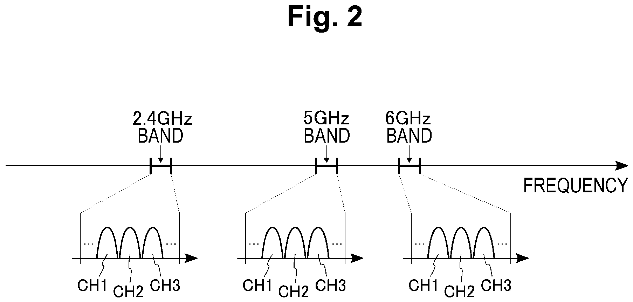

Fig. 2 is a conceptual diagram illustrating one example of a frequency band used for wireless communication in the information communication system 1 according to the first embodiment. As illustrated in Fig. 2, in the wireless communication between the base station AP and the wireless terminal apparatus WTA, for example, a 2.4 GHz band, a 5 GHz band, and a 6 GHz band is used. Each frequency band includes a plurality of channels. Fig. 2 illustrates a case where each of the 2.4 GHz band, the 5 GHz band, and the 6 GHz band includes three channels CH1, CH2, and CH3. Note that a frequency band other than the 2.4 GHz band, the 5 GHz band, and the 6 GHz band may be used for wireless communication. It is sufficient that at least one channel CH is allocated to each frequency band.

### <1-1-2> Hardware configuration

Hereinafter, a hardware configuration of each of the base station AP and the wireless terminal apparatus WTA will be described.

### (Hardware configuration of base station AP)

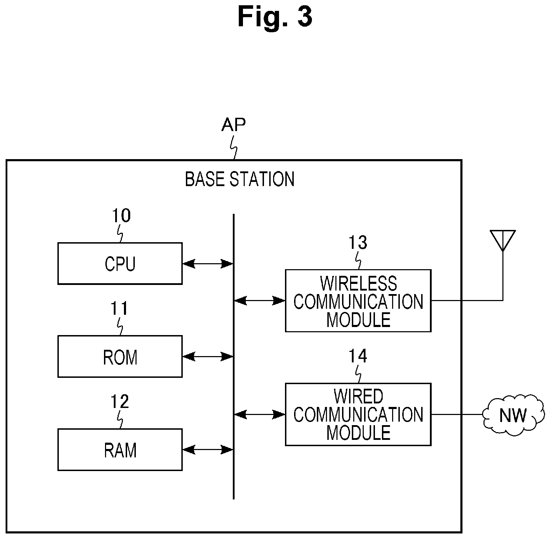

Fig. 3 is a block diagram illustrating one example of a hardware configuration of the base station AP included in the information communication system 1 according to the first embodiment. As illustrated in Fig. 3, the base station AP includes, for example, a central processing unit (CPU) 10, a read only memory (ROM) 11, a random access memory (RAM) 12, a wireless communication module 13, and a wired communication module 14.

The CPU 10 is an integrated circuit capable of executing various programs and controls an operation of the entire base station AP. The ROM 11 is a nonvolatile semiconductor memory and stores a program for controlling the base station AP, control data, and the like. The RAM 12 is, for example, a volatile semiconductor memory and is used as a working area of the CPU 10. The wireless communication module 13 is a circuit used to transmit and receive data with a wireless signal and is configured to be connectable to an antenna. In addition, the wireless communication module 13 may include a plurality of communication modules respectively corresponding to a plurality of frequency bands. The wired communication module 14 is a circuit used to transmit and receive data with a wired signal and is configured to be connectable to the network NW. Note that the base station AP may have another hardware configuration. For example, when the base station AP is wirelessly connected to the network NW, the wired communication module 14 may be omitted from the base station AP.

(Hardware configuration of wireless terminal apparatus WTA)

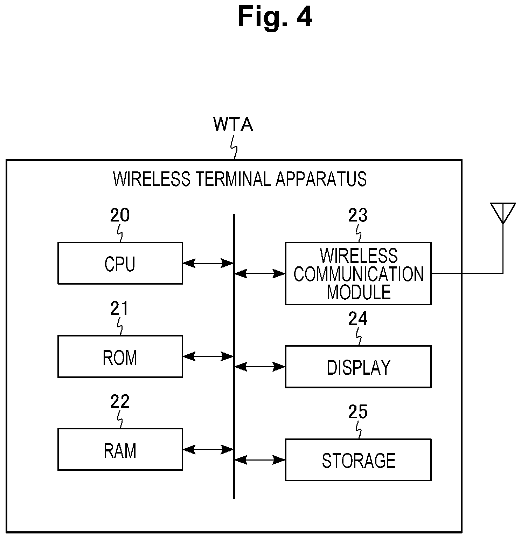

Fig. 4 is a block diagram illustrating one example of a hardware configuration of the wireless terminal apparatus WTA included in the information communication system 1 according to the first embodiment. As illustrated in Fig. 4, the wireless terminal apparatus WTA includes, for example, a CPU 20, a ROM 21, a RAM 22, a wireless communication module 23, a display 24, and a storage 25.

The CPU 20 is an integrated circuit capable of executing various programs and controls an operation of the entire wireless terminal apparatus WTA. The ROM 21 is a nonvolatile semiconductor memory and stores a program for controlling the wireless terminal apparatus WTA, control data, and the like. The RAM 22 is, for example, a volatile semiconductor memory and is used as a working area of the CPU 20. The wireless communication module 23 is a circuit used to transmit and receive data by a wireless signal and is configured to be connectable to an antenna. Furthermore, the wireless communication module 23 can include, for example, a plurality of communication modules respectively corresponding to a plurality of frequency bands. The display 24 displays, for example, a graphical user interface (GUI) corresponding to application software. The display 24 may have a function as an input interface of the wireless terminal apparatus WTA. The storage 25 is a nonvolatile storage device, and stores, for example, system software or the like of the wireless terminal apparatus WTA. Note that the wireless terminal apparatus WTA may have another hardware configuration. For example, when the wireless terminal apparatus WTA is an Internet of Things (IoT) terminal or the like, the display 24 may be omitted from the wireless terminal apparatus WTA.

### <1-1-3> Functional configuration

Hereinafter, a functional configuration of each of the base station AP and the wireless terminal apparatus WTA will be described.

### (Functional configuration of base station AP)

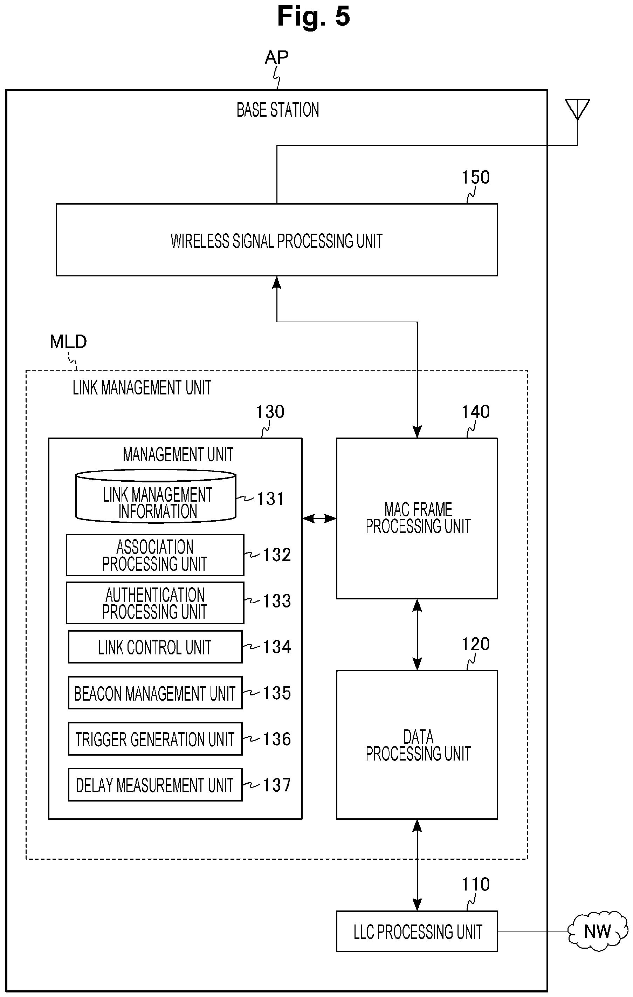

Fig. 5 is a block diagram illustrating one example of a functional configuration of the base station AP included in the information communication system 1 according to the first embodiment. As illustrated in Fig. 5, the base station AP includes, for example, an LLC processing unit 110, a data processing unit 120, a management unit 130, a MAC frame processing unit 140, and a wireless signal processing unit 150. The LLC processing unit 110 can be implemented by, for example, a combination of the CPU 10 and the wired communication module 14. Processing of the data processing unit 120, the management unit 130, the MAC frame processing unit 140, and the wireless signal processing unit 150, can be implemented by, for example, the wireless communication module 13 or a combination of the CPU 10, and the wireless communication module 13.

The LLC processing unit 110 executes, for example, processing of the LLC sublayer of the second layer and processing of the third layer to the seventh layer on input data. The data processing unit 120, the management unit 130, and the MAC frame processing unit 140 execute second-layer MAC sublayer processing on the input data. The wireless signal processing unit 150 executes first-layer processing on the input data. Hereinafter, a set of the data processing unit 120, the management unit 130, and the MAC frame processing unit 140 included in the base station AP is also referred to as "link management unit MLD of the base station AP".

Hereinafter, details of each functional configuration included in the base station AP will be described.

The LLC processing unit 110 receives data from the server SV via the network NW, for example. Then, the LLC processing unit 110 adds a destination service access point (DSAP) header, a source service access point (SSAP) header, and the like to the received data to generate an LLC packet. Then, the LLC processing unit 110 inputs the generated LLC packet to the data processing unit 120. In addition, the LLC processing unit 110 receives the LLC packet from the data processing unit 120 and extracts data from the received LLC packet. Then, the LLC processing unit 110 transmits the extracted data to the server SV via the network NW.

The data processing unit 120 adds a MAC header to the LLC packet input from the LLC processing unit 110 to generate a MAC frame. Then, the data processing unit 120 inputs the generated MAC frame to the MAC frame processing unit 140. In addition, the data processing unit 120 receives the MAC frame from the MAC frame processing unit 140 and extracts the LLC packet from the received MAC frame. Then, the data processing unit 120 inputs the extracted LLC packet to the LLC processing unit 110. Hereinafter, a MAC frame including data is also referred to as a "data frame".

The management unit 130 manages the state of the link between the base station AP and the wireless terminal apparatus WTA. Information related to control, management, and the like of a link can be exchanged between the management unit 130 and the MAC frame processing unit 140. Furthermore, the management unit 130 can cause the MAC frame processing unit 140 to execute the instruction. The management unit 130 includes, for example, link management information 131, an association processing unit 132, an authentication processing unit 133, a link control unit 134, a beacon management unit 135, a trigger generation unit 136, and a delay determination unit 137.

The link management information 131 is a table including information related to a link between the base station AP and the wireless terminal apparatus WTA wirelessly connected thereto. The link management information 131 may store settings related to the TWT function.

The association processing unit 132 executes a protocol related to an association in a case where a connection request from the wireless terminal apparatus WTA is received.

The authentication processing unit 133 executes a protocol related to authentication subsequent to the association. Hereinafter, a MAC frame including information related to control such as association and authentication is also referred to as a "management frame".

The link control unit 134 controls the state of a link with the STA function of the wirelessly-connected wireless terminal apparatus WTA for each AID. The STA function corresponds to a wireless signal processing unit included in each of the base station AP and the wireless terminal apparatus WTA. The STA function may use one or more channels. In the following description, it is assumed that the STA function uses one channel. The STA function of the base station AP and the STA function of the wireless terminal apparatus WTA are paired to form one link.

The beacon management unit 135 manages information transmitted as a beacon signal by the base station AP. The beacon management unit 135 generates, for example, a MAC frame including management information, and inputs the MAC frame to the MAC frame processing unit 140. Management information includes a control value used in the TWT function described later. A beacon is a type of management frame.

The trigger generation unit 136 generates a MAC frame including trigger information and inputs the MAC frame to the MAC frame processing unit 140. Trigger information includes information indicating a resource (frequency, transmission timing, period) for transmission to the wireless terminal apparatus WTA that transmits uplink data when the TWT function is used. Hereinafter, a MAC frame including trigger information is referred to as a "trigger frame".

The delay determination unit 137 determines whether or not delay time in the transmission of the traffic exceeds a predetermined threshold value on the basis of delay information included in the MAC frame received by the base station AP. Then, the delay determination unit 137 can notify the link control unit 134 or the like of the determination result.

The MAC frame processing unit 140 receives the MAC frame from the data processing unit 120 or the management unit 130, and temporarily stores (buffers) the received MAC frame. Then, the MAC frame processing unit 140 executes carrier sensing. Carrier sensing is processing of confirming the situation of a channel. In a case where the channel is in a busy state, the MAC frame processing unit 140 continues the carrier sensing. In a case where the channel is in an idle state, the MAC frame processing unit 140 inputs the MAC frame to the wireless signal processing unit 150. Further, the MAC frame processing unit 140 receives the MAC frame from the wireless signal processing unit 150, and inputs the MAC frame to the data processing unit 120 or the management unit 130 according to the type of the MAC frame. Specifically, in a case where the MAC frame is a data frame, the MAC frame processing unit 140 inputs the MAC frame to the data processing unit 120, and in a case where the MAC frame is a management frame, the MAC frame processing unit 140 inputs the MAC frame to the management unit 130.

The wireless signal processing unit 150 adds a preamble, a physical layer (PHY) header, and the like to the data input from the MAC frame processing unit 140 to generate a wireless frame. Then, the wireless signal processing unit 150 performs a predetermined modulation operation on the wireless frame to convert the wireless frame into a wireless signal, and radiates (transmits) the wireless signal via the antenna. The predetermined modulation operation or the like includes convolutional coding, interleaving, subcarrier modulation, inverse fast Fourier transform (IFFT), orthogonal frequency division multiplexing (OFDM) modulation, and frequency transform, for example. Further, the wireless signal processing unit 150 receives a wireless signal from the wireless terminal apparatus WTA via the antenna, and performs a predetermined demodulation operation on the received wireless signal to obtain a wireless frame. The predetermined demodulation operation or the like includes frequency transform, OFDM demodulation, fast Fourier transform (FFT), subcarrier demodulation, deinterleaving, and Viterbi decoding, for example. Then, the wireless signal processing unit 150 extracts the MAC frame from the wireless frame, and inputs the extracted MAC frame to the MAC frame processing unit 140. Hereinafter, the wireless signal processing unit 150 is also referred to as an STA (or STA function) of the base station AP. Note that the base station AP may include a plurality of wireless signal processing units.

### (Functional configuration of MAC frame processing unit 140 of base station AP)

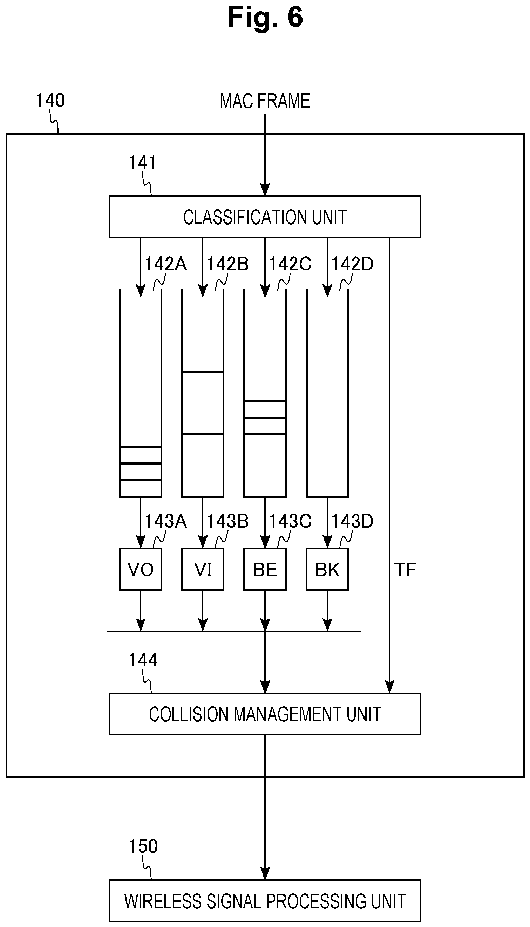

Fig. 6 is a block diagram illustrating one example of a functional configuration of the MAC frame processing unit 140 of the base station AP included in the information communication system 1 according to the first embodiment. Fig. 6 illustrates details of a channel access function of the MAC frame processing unit 140. As illustrated in Fig. 6, the MAC frame processing unit 140 includes, for example, a classification unit 141, transmission queues 142A, 142B, 142C, and 142D, carrier sensing execution units 143A, 143B, 143C, and 143D, and a collision management unit 144.

The classification unit 141 classifies the MAC frame received from the data processing unit 120 into a plurality of access categories on the basis of a traffic type (TID) included in the MAC header. The traffic type includes, for example, "voice (VO)", "video (VI)", "best effort (BE)", "background (BK)", and "low latency (LL)". Then, the classification unit 141 inputs the MAC frame to one of the corresponding transmission queues 142A, 142B, 142C, and 142D. In the present example, the classification unit 141 inputs VO data to the transmission queue 142A, inputs VI data to the transmission queue 142B, inputs BE data to the transmission queue 142C, and inputs BK data to the transmission queue 142D. Furthermore, the classification unit 141 inputs a trigger frame TF received from the trigger generation unit 136 or an instruction to generate the trigger frame TF to the collision management unit 144 without passing through the transmission queue 142, for example.

Each of the transmission queues 142A, 142B, 142C, and 142D buffers the input MAC frame. In the present example, the transmission queues 142A, 142B, 142C, and 142D buffer the data of VO, VI, BE, and BK, respectively.

Each of the carrier sensing execution units 143A, 143B, 143C, and 143D executes carrier sensing based on carrier sense multiple access with collision avoidance (CSMA/CA) according to an access parameter set in advance for each carrier sensing execution unit 143. The access parameter is set for each access category, and is set, for example, such that transmission of a wireless signal is prioritized in the order of "VO", "VI", "BE", and "BK". The carrier sensing execution units 143A, 143B, 143C, and 143D execute carrier sensing for the MAC frames buffered in the transmission queues 142A, 142B, 142C, and 142D, respectively. For example, in a case where the transmission right is acquired (that is, when the channel is idle), the carrier sensing execution unit 143A extracts the MAC frame from the transmission queue 142A. Then, the carrier sensing execution unit 143A outputs the extracted MAC frame to the wireless signal processing unit 150 via the collision management unit 144.

The collision management unit 144 prevents data transmission collision in a case where a plurality of carrier sensing execution units 143 acquires the transmission right for the same link. In other words, the collision management unit 144 adjusts the transmission timing of the data for which the transmission right is acquired by the same STA function, and outputs the data of the access category with high priority to the STA function. Note that the trigger frame TF can be processed with a lower latency than other traffic since carrier sensing is executed without passing through the transmission queue 142. In addition, when the instruction to generate the trigger frame TF is input, the collision management unit 144 may output the instruction to the STA function in preference to other traffic.

Note that in the embodiment, the case where the MAC frame processing unit 140 implements the channel access function is exemplified, but the present invention is not limited thereto. For example, the wireless signal processing unit 150 may implement the channel access function. As the access parameter, for example, CWmin, CWmax, AIFS, and TXOPLimit are used. CWmin and CWmax respectively indicate minimum and maximum values of a contention window which is a transmission waiting time for collision avoidance. An arbitration inter frame space (AIFS) indicates a fixed transmission waiting time set for each access category for collision avoidance control that has a priority control function. TXOPLimit indicates an upper limit value of a transmission opportunity (TXOP) corresponding to a channel occupancy time. The shorter the CWmin and CWmax are, the easier a transmission right of the transmission queue 142 is obtained. The smaller the AIFS is, the higher the priority of the transmission queue 142 is. The higher the value of TXOPLimit is, the larger an amount of data transmitted with one transmission right is.

### (Functional configuration of wireless terminal apparatus WTA)

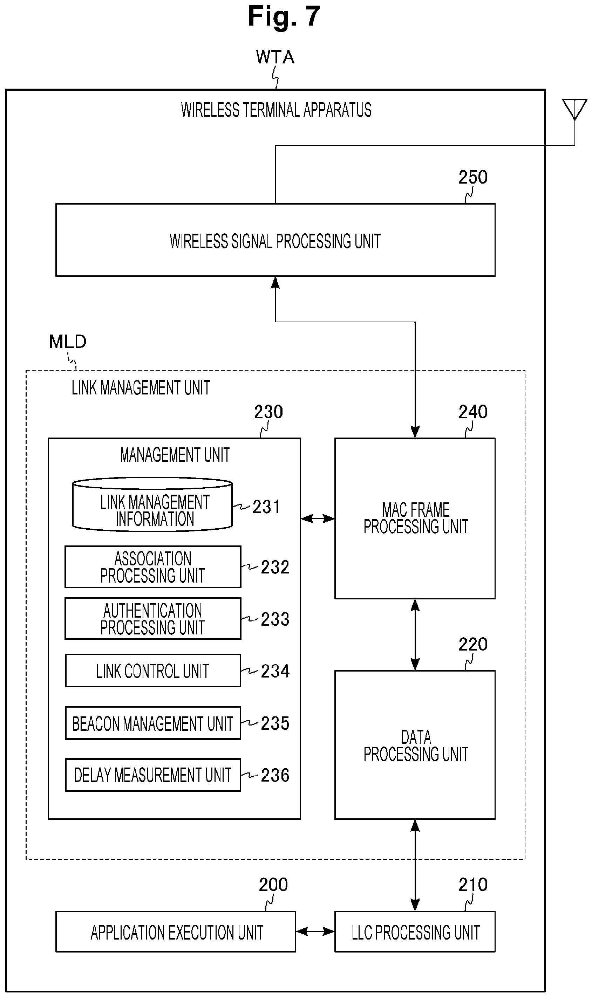

Fig. 7 is a block diagram illustrating one example of a functional configuration of the wireless terminal apparatus WTA included in the information communication system 1 according to the first embodiment. As illustrated in Fig. 7, the wireless terminal apparatus WTA includes, for example, an application execution unit 200, an LLC processing unit 210, a data processing unit 220, a management unit 230, a MAC frame processing unit 240, and a wireless signal processing unit 250. Processing of each of the application execution unit 200 and the LLC processing unit 210 can be implemented by, for example, the CPU 20 and the RAM 22. Processing of the data processing unit 220, the management unit 230, the MAC frame processing unit 240, and the wireless signal processing unit 250 can be implemented by, for example, a combination of the CPU 20, the RAM 22, and the wireless communication module 23.

The application execution unit 200 executes seventhlayer processing on the input data. The LLC processing unit 210 executes processing of the LLC sublayer of the second layer and processing of the third layer to the sixth layer on input data. The data processing unit 220, the management unit 230, and the MAC frame processing unit 240 execute second-layer MAC sublayer processing on the input data. The wireless signal processing unit 250 executes first-layer processing on the input data. Hereinafter, a set of the data processing unit 220, the management unit 230, and the MAC frame processing unit 240 included in the wireless terminal apparatus WTA is also referred to as "link management unit MLD of the wireless terminal apparatus WTA".

Hereinafter, details of each functional configuration included in the wireless terminal apparatus WTA will be described.

The application execution unit 200 executes an application that can use data input from the LLC processing unit 210. Furthermore, the application execution unit 200 inputs data to the LLC processing unit 210 and acquires data from the LLC processing unit 210 in response to an operation of the application. The application execution unit 200 can display application information on the display 24. In addition, the application execution unit 200 can execute processing in response to an operation by the input interface.

The LLC processing unit 210 adds a DSAP header, an SSAP header, and the like to data received from the application execution unit 200 to generate an LLC packet. Then, the LLC processing unit 210 inputs the generated LLC packet to the data processing unit 220. In addition, the LLC processing unit 210 receives the LLC packet from the data processing unit 220 and extracts data from the received LLC packet. Then, the LLC processing unit 210 inputs the extracted data to the application execution unit 200.

The data processing unit 220 adds a MAC header to the LLC packet input from the LLC processing unit 210 to generate a MAC frame. Then, the data processing unit 220 inputs the generated MAC frame to the MAC frame processing unit 240. In addition, the data processing unit 220 receives the MAC frame from the MAC frame processing unit 240 and extracts the LLC packet from the received MAC frame. Then, the data processing unit 220 inputs the extracted LLC packet to the LLC processing unit 210.

The management unit 230 manages the state of the link between the base station AP and the wireless terminal apparatus WTA. Information related to control, management, and the like of a link can be exchanged between the management unit 230 and the MAC frame processing unit 240. Furthermore, the management unit 230 can instruct the MAC frame processing unit 240 to execute predetermined processing. The management unit 230 includes, for example, link management information 231, an association processing unit 232, an authentication processing unit 233, a link control unit 234, a beacon management unit 235, and a delay measurement unit 236.

The link management information 231 is a table including information related to a link with the base station AP wirelessly connected. The link management information 231 may store settings related to the TWT function.

The association processing unit 232 executes a protocol related to an association when transmitting a connection request to the base station AP.

The authentication processing unit 233 executes a protocol related to authentication subsequent to the association. The link control unit 234 controls the state of a link with the wirelessly-connected base station AP.

The beacon management unit 235 manages information included in the beacon received from the base station AP. For example, the beacon management unit 235 receives management information included in the beacon, and instructs the link control unit 234 to control the link based on the management information. The beacon management unit 235 may notify the data processing unit 220 of the content of the management information.

When the wireless terminal apparatus WTA transmits and receives low latency data (traffic), the delay measurement unit 236 measures a queue delay of the data, that is, a queue delay time QL, and outputs the measured queue delay time QL to the MAC frame processing unit 240. For example, in a case where low latency data is input to the MAC frame processing unit 240, the queue delay time QL corresponds to a time from input to the MAC frame processing unit 240 to output to the STA function. The present invention is not limited thereto, and other criteria may be used as the queue delay time QL as long as the queue delay can be evaluated on the basis of a certain criterion.

The MAC frame processing unit 240 receives the MAC frame from the data processing unit 220 or the management unit 230, and temporarily stores (buffers) the received MAC frame. Then, the MAC frame processing unit 240 executes carrier sensing. In a case where the channel is in a busy state, the MAC frame processing unit 240 continues the carrier sensing. In a case where the channel is in an idle state, the MAC frame processing unit 240 inputs the MAC frame to the wireless signal processing unit 250. Further, the MAC frame processing unit 240 receives the MAC frame from the wireless signal processing unit 250, and inputs the MAC frame to the data processing unit 220 or the management unit 230 according to the type of the MAC frame. For example, in a case where the MAC frame is a data frame, the MAC frame processing unit 240 inputs the MAC frame to the data processing unit 220, and in a case where the MAC frame is a management frame, the MAC frame processing unit 240 inputs the MAC frame to the management unit 230.

The wireless signal processing unit 250 adds a preamble, a physical layer (PHY) header, and the like to the data input from the MAC frame processing unit 240 to generate a wireless frame. Then, the wireless signal processing unit 250 performs a predetermined modulation operation on the wireless frame to convert the wireless frame into a wireless signal, and radiates (transmits) the wireless signal via the antenna. Further, the wireless signal processing unit 250 receives a wireless signal from the wireless terminal apparatus WTA via the antenna, and performs a predetermined demodulation operation on the received wireless signal to obtain a wireless frame. Then, the wireless signal processing unit 250 extracts the MAC frame from the wireless frame, and inputs the extracted MAC frame to the MAC frame processing unit 240. Hereinafter, the wireless signal processing unit 250 is also referred to as an STA (or STA function) of the wireless terminal apparatus WTA. Note that the wireless terminal apparatus WTA may include a plurality of wireless signal processing units.

### (Functional configuration of MAC frame processing unit 240 of wireless terminal apparatus WTA)

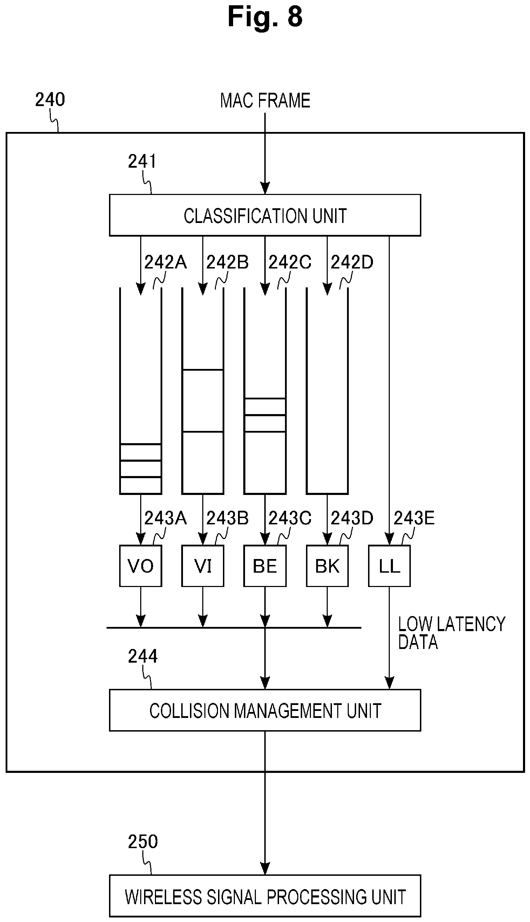

Fig. 8 is a block diagram illustrating one example of a functional configuration of the MAC frame processing unit 240 of the wireless terminal apparatus WTA included in the information communication system 1 according to the first embodiment. Fig. 8 illustrates details of a channel access function and a downlink data receiving function of the MAC frame processing unit 240. As illustrated in Fig. 8, the MAC frame processing unit 240 includes, for example, a classification unit 241, transmission queues 242A, 242B, 242C, and 242D, carrier sensing execution units 243A, 243B, 243C, 243D, and 243E, and a collision management unit 244.

The classification unit 241 classifies the MAC frame received from the data processing unit 220 into a plurality of access categories on the basis of the TID included in the MAC header. Then, the classification unit 241 inputs the MAC frame to one of the corresponding transmission queues 242A, 242B, 242C, and 242D. In the present example, the classification unit 241 inputs VO data to the transmission queue 242A, inputs VI data to the transmission queue 242B, inputs BE data to the transmission queue 242C, and inputs BK data to the transmission queue 242D. In addition, the classification unit 241 inputs LL data to the carrier sensing execution unit 243E without passing through the transmission queue 242, for example. LL is traffic (low latency data) which is set to have a higher priority than other traffic and for which low latency is required.

Each of the transmission queues 242A, 242B, 242C, and 242D buffers the input MAC frame. In the present example, the transmission queues 242A, 242B, 242C, and 242D buffer the data of VO, VI, BE, and BK, respectively.

Each of the carrier sensing execution units 243A, 243B, 243C, 243D, and 243E executes carrier sensing based on CSMA/CA according to an access parameter set in advance for each carrier sensing execution unit 243. Then, each of the carrier sensing execution units 243A, 243B, 243C, 243D, and 243E outputs the MAC frame for which the transmission right has been acquired to the wireless signal processing unit 250 via the collision management unit 244. The access parameter is set such that, for example, transmission of a wireless signal is prioritized in the order of "LL", "VO", "VI", "BE", and "BK". The carrier sensing execution units 243A, 243B, 243C, and 243D execute carrier sensing for the MAC frames buffered in the transmission queues 242A, 242B, 242C, and 242D, respectively. The carrier sensing execution unit 243E executes carrier sensing for the MAC frame of LL received from the classification unit 241. As described above, the MAC frame of LL can be processed with a lower latency than other traffic since carrier sensing is executed without passing through the transmission queue 242. Note that the carrier sensing execution unit 243E may skip carrier sensing in a case of data transmission in response to reception of the trigger frame TF.

The collision management unit 244 prevents data transmission collision in a case where a plurality of carrier sensing execution units 243 acquires the transmission right. In other words, the collision management unit 144 adjusts the transmission timing of the data for which the transmission right is acquired, and outputs the data of the access category with high priority to the STA function.

When the MAC frame processing unit 240 receives the trigger frame TF addressed to its own station, the MAC frame processing unit 240 outputs a MAC frame generated from low latency data and the queue delay time QL of the MAC frame to the STA function as a set. That is, the MAC frame processing unit 240 outputs the low latency data to the STA function together with the data and the queue delay time as a response to the trigger frame TF instead of transmission by CSMA/CA.

Note that in the first embodiment, the case where the MAC frame processing unit 240 implements the channel access function is exemplified, but the present invention is not limited thereto. For example, the wireless signal processing unit 250 may implement the channel access function.

### <1-2> TWT function

Details of the TWT function in the first embodiment will be described below.

The link management unit MLD of the base station AP or the wireless terminal apparatus WTA executes, for example, setup of the TWT function in order to exchange low latency data. The setup of the TWT function may be executed at the time of link setup, or may be executed on the basis of a transmission request of low latency data from the wireless terminal apparatus WTA after the link is established. The parameter (hereinafter referred to as a TWT setting) used in the TWT function is set by the link management unit MLD of each of the base station AP and the wireless terminal apparatus WTA. The TWT setting in the first embodiment is set up and managed by a pair of the base station AP and the wireless terminal apparatus WTA. The base station AP may manage the TWT setting for each wireless terminal apparatus WTA or for each group. In the first embodiment, a case where the base station AP manages the TWT setting in units of wireless terminal apparatuses WTA will be described.

The TWT setting is managed by the management unit 130 of the base station AP and the management unit 230 of the wireless terminal apparatus WTA. The TWT setting includes, for example, a TWT start time, a TWT cycle, and a TWT duration. The TWT start time corresponds to the start time of the TWT service period. The TWT cycle corresponds to the cycle of the TWT service period. One cycle of the TWT cycle may be referred to as a "TWT interval". The TWT duration corresponds to a period in which a transmission opportunity is given to the wireless terminal apparatus WTA. In the TWT duration, the link of the wireless terminal apparatus WTA to which the transmission opportunity is given by the base station AP is set to a state in which a wireless signal can be received. When the TWT function is used, one cycle of the TWT service period can be identified by the TWT start time and the TWT duration.

The link management unit MLD of the wireless terminal apparatus WTA stands by for transmission of low latency data until the TWT service period, and causes the STA function to transmit the low latency data on the basis of reception of the trigger frame TF within the TWT service period. The cycle of the TWT service period is preferably set in accordance with the transmission cycle of low latency data of the wireless terminal apparatus WTA. The initial value of the TWT setting including the TWT start time (TWT interval) and the TWT duration can be set by various methods. For determining the initial value of the TWT setting, attributes of traffic such as an occurrence interval and a data amount of traffic notified from an application that generates TWT low latency traffic (data) may be used. The base station AP may notify the server SV on the network NW of the type of traffic to acquire the corresponding attribute of the traffic and determine the initial value of the TWT setting. Furthermore, as the initial value of the TWT setting, a default value set in the base station AP or the wireless terminal apparatus WTA may be used.

Note that the TWT start time may be expressed by the TWT cycle (TWT interval). The wireless terminal apparatus WTA can recognize, as the next TWT start time, a time obtained by adding the TWT cycle to the previous TWT start time as the start point. In other words, the wireless terminal apparatus WTA can recognize, as the start time of the next TWT duration, a time obtained by adding the TWT cycle to the previous TWT start time.

### (Outline of uplink data transmission method)

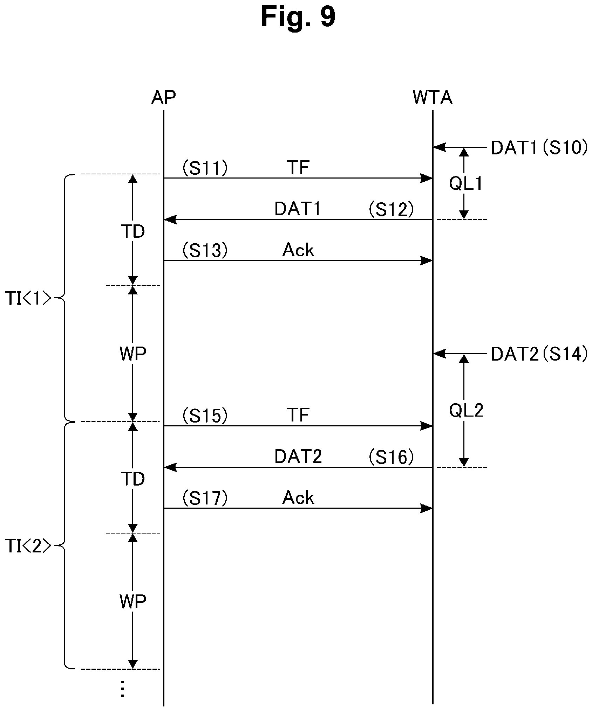

Fig. 9 is a sequence diagram illustrating one example of an uplink data transmission method when the TWT function is used in the information communication system 1 according to the first embodiment. Fig. 9 illustrates a case where uplink data is transmitted in each of two consecutive TWT intervals TI <1> and TI <2>. Each of the TWT intervals TI <1> and TI <2> has a TWT duration TD and a standby period WP. The standby period WP corresponds to a period in which a transmission opportunity is not given while the TWT function is used. An outline of an uplink data transmission method will be described below with reference to Fig 9.

The wireless terminal apparatus WTA buffers uplink data DAT1 before a TWT interval TI <1> (S10). When the start time of the TWT interval TI <1> comes, the base station AP transmits the trigger frame TF to the wireless terminal apparatus WTA within the TWT duration TD (S11). The timing at which the trigger frame TF is transmitted is preferably the TWT start time. In order to transmit the trigger frame TF at the TWT start time, the STA function may transmit the trigger frame TF by using a category of enhanced distributed channel access (EDCA) having the highest priority, or may transmit the trigger frame TF by a preferential transmission means different from EDCA. The wireless terminal apparatus WTA transmits the uplink data DAT1 to the base station AP on the basis of reception of the trigger frame TF (S12). When the base station AP successfully receives the uplink data DAT1, the base station AP transmits an Ack to the wireless terminal apparatus WTA (S13). By receiving the Ack after transmitting the uplink data DAT1, the wireless terminal apparatus WTA recognizes that the DAT1 is successfully transmitted, and discards the DAT1. The processing of S11 to S13 is executed within the TWT duration TD of the TWT interval TI <1>.

When the TWT duration TD ends within the TWT interval TI <1>, the processing proceeds to the standby period WP. In the present example, the wireless terminal apparatus WTA buffers uplink data DAT2 during the standby period WP of the TWT interval TI <1> (S14). When the start time of a TWT interval TI <2> comes, the base station AP transmits the trigger frame TF to the wireless terminal apparatus WTA within the TWT duration TD (S15). The wireless terminal apparatus WTA transmits the uplink data DAT2 to the base station AP on the basis of reception of the trigger frame TF (S16). When the base station AP successfully receives the uplink data DAT2, the base station AP transmits an Ack to the wireless terminal apparatus WTA (S17). By receiving the Ack after transmitting the uplink data DAT2, the wireless terminal apparatus WTA recognizes that the DAT2 is successfully transmitted, and discards the DAT2. The processing of S25 to S27 is executed within the TWT duration TD of the TWT interval TI <2>. Thereafter, the standby period WP of the TWT interval TI <2> is reached.

As described above, when the TWT function is used, the base station AP notifies the wireless terminal apparatus WTA of the data transmission opportunity using the trigger frame TF in the TWT duration TD of each TWT interval TI. Then, each time the wireless terminal apparatus WTA receives the trigger frame TF, the wireless terminal apparatus WTA attempts to transmit the buffered data to the base station AP.

Note that, in Fig. 9, the time from when the wireless terminal apparatus WTA buffers the uplink data DAT1 (S10) to when it transmits the uplink data DAT1 to the base station AP (S12) is indicated as "queue delay time QL1", and the time from when the wireless terminal apparatus WTA buffers the uplink data DAT2 (S14) to when it transmits the uplink data DAT2 to the base station AP (S16) is indicated as "queue delay time QL2". Each of the queue delay times QL1 and QL2 can be measured by the delay measurement unit 236.

In addition, at the TWT start time, the base station AP may suspend CSMA/CA of another queue in order to transmit the trigger frame TF with the highest priority. For this purpose, the management unit 130 of the base station AP may notify the link (STA function) of the transmission start time of the trigger frame TF.

### (Format of trigger frame TF)

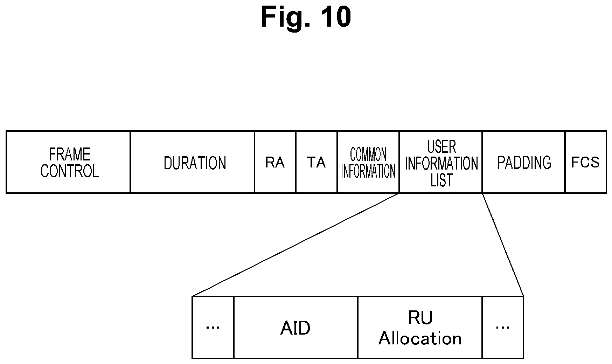

Fig. 10 is a conceptual diagram illustrating one example of a format of a trigger frame transmitted in the TWT service period of the information communication system 1 according to the embodiment. As illustrated in Fig. 10, a plurality of fields included in the trigger frame include, for example, a frame control field, a duration field, address fields (RA and TA), a common information field, a user information list field, a padding field, and a frame check sequence (FCS) field.

The frame control field stores various kinds of control information. For example, the frame control field includes information indicating a frame type of the wireless frame. The duration field indicates a scheduled period in which the wireless line is used. The address field indicates a BSSID, a transmission source address, a destination address, an address of a transmitter terminal, an address of a receiver terminal, and the like. The common information field includes information indicating a type of the trigger frame and the like. The user information list field includes, for example, "AID" and "resource unit (RU) allocation". The wireless terminal apparatus WTA recognizes that the resource is allocated to its own station based on the AID. In addition, the wireless terminal apparatus WTA recognizes the allocated resource by RU allocation. The padding is a region for adjusting the data length of the wireless frame. The FCS field stores an error detection code of a set of a MAC header and a frame body field and is used to determine whether there is an error in the data frame.

### (Format of beacon signal)

The base station AP uses, for example, a beacon as a method of notifying the wireless terminal apparatus WTA of the TWT setting. The beacon including the TWT setting is generated and transmitted by, for example, the beacon management unit 135 of the base station AP. Furthermore, the TWT setting included in the beacon received by the wireless terminal apparatus WTA is acquired and managed by the beacon management unit 235. As a result, the beacon management unit 135 of the base station AP can notify the wireless terminal apparatus WTA of the TWT service period for transmitting low latency data.

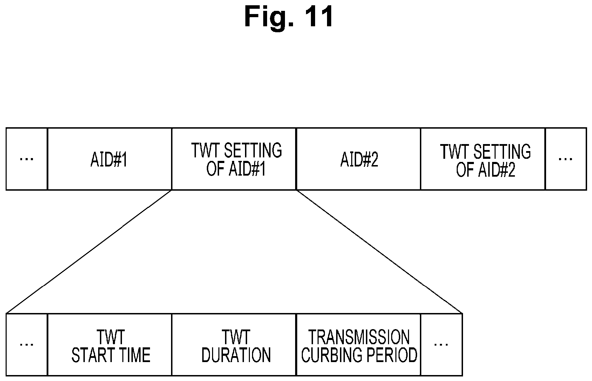

Fig. 11 is a conceptual diagram illustrating one example of a format of a beacon including a TWT setting used in the information communication system 1 according to the first embodiment. As illustrated in Fig. 11, the beacon may include an AID of the wireless terminal apparatus WTA wirelessly connected to the base station AP and a TWT setting for each AID. Specifically, the beacon sequentially stores sets of the AID and the TWT setting, such as "AID #1", "TWT setting of AID #1", "AID #2", and "TWT setting of AID #2". The wireless terminal apparatus WTA can determine whether or not the TWT setting is for its own station on the basis of the set of the AID and the TWT setting. Note that a beacon may be in another format as long as the wireless terminal apparatus WTA can determine the set of the AID and the TWT setting. Furthermore, in a case where the TWT setting is managed by a group, the base station AP transmits, for example, a beacon including information of a set of an identifier of a group of wireless terminal apparatuses WTA sharing the TWT setting and the TWT setting associated with the group.

The TWT setting for each AID included in the beacon includes, for example, a TWT start time, a TWT duration, and a transmission curbing period. The transmission curbing period indicates a period in which transmission of uplink data to the wireless terminal apparatus WTA is curbed or prohibited. The transmission curbing period corresponds to, for example, a period that starts at the TWT start time and continues over the TWT duration. That is, the TWT duration and the transmission curbing period may overlap. When the management unit 230 inputs the TWT start time, the TWT duration, (and the transmission curbing period), the STA function of the wireless terminal apparatus WTA sets a period indicated by these pieces of information as the transmission curbing period. That is, in a case where the STA function of the wireless terminal apparatus WTA acquires the transmission right of data other than low latency data, the STA function calculates a period required to complete the transmission, and in a case where there is an overlap between the transmission curbing period and the period, the STA function curbs the transmission during the period. On the other hand, in a case where the STA function of the wireless terminal apparatus WTA receives the trigger frame TF addressed to the own station at the TWT start time, the STA function acquires and transmits low latency data from the LL transmission queue 242E.

When receiving a beacon, the beacon management unit 235 of each wireless terminal apparatus WTA acquires the TWT start time, the TWT duration, and the transmission curbing period, and notifies each link (STA function) of the information. As a result, the base station AP can autonomously curb transmission of uplink data within the TWT service period in which low latency data is transmitted to the wireless terminal apparatuses WTA other than the wireless terminal apparatus WTA to which transmission of low latency data is assigned among the plurality of wireless terminal apparatuses WTA connected wirelessly.

### (TWT setting update method)

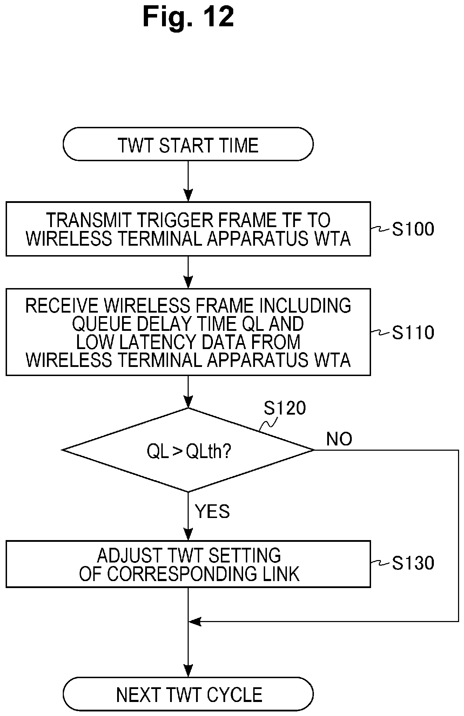

Fig. 12 is a flowchart illustrating one example of a method of updating the TWT setting in the information communication system 1 according to the first embodiment. Hereinafter, a method of updating the TWT setting in the first embodiment will be described with reference to Fig. 12 while focusing on the operation of the base station AP.

When the TWT start time of the TWT cycle comes, the base station AP transmits the trigger frame TF to the wireless terminal apparatus WTA (S100). When low latency data of uplink data is input, the wireless terminal apparatus WTA measures, for example, the time from input of the low latency data to reception of the trigger frame TF, and generates the queue delay time QL. Then, the wireless terminal apparatus WTA transmits the queue delay time QL together with the low latency data to the base station AP. That is, the wireless terminal apparatus WTA transmits the low latency data on the basis of reception of the trigger frame TF and notifies the base station AP of the queue delay time QL of the low latency data.

Next, the base station AP receives a wireless frame including the queue delay time QL and the low latency data from the wireless terminal apparatus WTA (S110).

Next, the base station AP determines whether or not "QL > QLth" is satisfied (S120). Specifically, the base station AP determines (evaluates) whether or not the queue delay time in the traffic exceeds a predetermined threshold QLth on the basis of the queue delay time QL included in the received MAC frame. QLth is a threshold of the queue delay time, and is set, for example, for each flow of low latency data. The base station AP may use, as QLth, a statistical value of past information related to transmission and reception of low latency data. A different numerical value may be set as QLth for each wireless terminal apparatus WTA.

In the processing of S120, if "QL > QLth" is not satisfied (S120, NO), the base station AP proceeds to processing of the next TWT cycle without adjusting the TWT setting.

If "QL > QLth" is satisfied in the processing of S120 (S120, YES), the base station AP adjusts the TWT setting of the link (S130). In the processing of S130, the base station AP can adjust (update) the TWT start time (TWT interval), the TWT duration, and the like. Note that the method of adjusting the TWT setting is not limited thereto. For example, the base station AP may calculate the distribution (cycle and variation) of the input and retirement tools of the past low latency data on the basis of the queue delay time and the reception time of the low latency data, and set the TWT interval and the TWT duration such that a predetermined rate is included. After updating the TWT setting, the base station AP proceeds to processing of the next TWT cycle.

Note that when updating (adjusting) the TWT setting, the base station AP notifies the wireless terminal apparatus WTA of parameters of the updated TWT setting. As a method of notifying the wireless terminal apparatus WTA of the updated TWT setting from the base station AP a beacon is used, for example. Alternatively, the base station AP may notify the wireless terminal apparatus WTA of the updated TWT setting during the TWT service period. As a result, each of the base station AP and the wireless terminal apparatus WTA can exchange low latency data using the TWT function to which the updated TWT setting (for example, the TWT interval and the TWT duration) is applied.

### (Specific example of TWT setting update method)

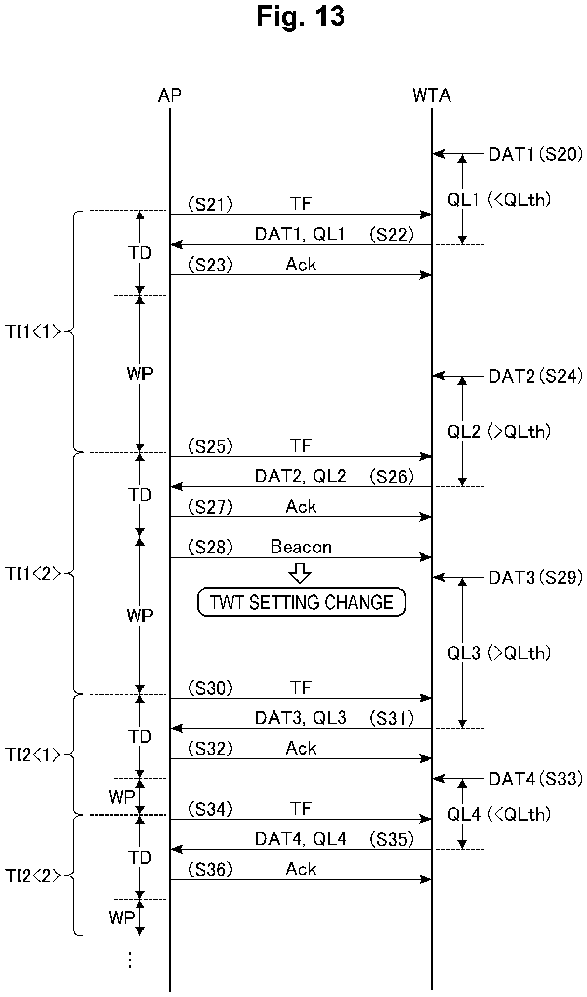

Fig. 13 is a sequence diagram illustrating a specific example of a method of updating the TWT setting in the information communication system 1 according to the first embodiment. Fig. 13 illustrates one example of an operation when transitioning from a TWT interval TI1 to which a first TWT setting is applied to a TWT interval TI2 to which a second TWT setting is applied. Hereinafter, a specific example of a TWT setting update method will be described with reference to Fig. 13.

The wireless terminal apparatus WTA buffers the uplink data DAT1 before a TWT interval TI1 <1> (S20). At the start time of the TWT interval TI1 <1>, the base station AP transmits the trigger frame TF to the wireless terminal apparatus WTA (S21). The wireless terminal apparatus WTA transmits the uplink data DAT1 and the queue delay time QL1 of the DAT1 to the base station AP on the basis of reception of the trigger frame TF (S22). In the present example, QL1 is shorter than QLth (QL1 < QLth). When receiving DAT1 and QL1 successfully, the base station AP transmits an Ack to the wireless terminal apparatus WTA (S23). Then, the wireless terminal apparatus WTA discards DAT1 on the basis of reception of the Ack. In addition, the base station AP confirms that QL1 < QLth in the processing related to reception of DAT1, and determines that adjustment of the TWT setting is unnecessary at this point of time (S120, NO).

In the present example, the wireless terminal apparatus WTA buffers the uplink data DAT2 during the standby period WP of the TWT interval TI1 <1> (S24). Then, at the start time of a TWT interval TI1 <2>, the base station AP transmits the trigger frame TF to the wireless terminal apparatus WTA (S25). The wireless terminal apparatus WTA transmits the uplink data DAT2 and the queue delay time QL2 of the DAT2 to the base station AP on the basis of reception of the trigger frame TF (S26). In the present example, QL2 is longer than QLth (QL2 > QLth). When receiving DAT2 and QL2 successfully, the base station AP transmits an Ack to the wireless terminal apparatus WTA (S27). Then, the wireless terminal apparatus WTA discards DAT2 on the basis of reception of the Ack. In addition, the base station AP adjusts the TWT setting on the basis of QL2 > QLth in the processing related to reception of DAT2 (S120, YES). Then, the base station AP notifies the wireless terminal apparatus WTA of the adjusted TWT setting using the beacon (S28). Thereafter, the wireless terminal apparatus WTA changes (updates) the TWT setting of its own station on the basis of the TWT setting included in the received beacon. In the present example, the next TWT interval TI2 is set to be shorter than the TWT interval TI1. That is, for example, when detecting that the delay of the transmission of the low latency data is large, the base station AP updates the TWT setting so that the cycle of the TWT service cycle becomes short.

In the present example, the wireless terminal apparatus WTA buffers uplink data DAT3 during the standby period WP of the TWT interval TI1 <2> (S29). Then, at the start time of the updated TWT interval TI2 <1>, the base station AP transmits the trigger frame TF to the wireless terminal apparatus WTA (S30). The wireless terminal apparatus WTA transmits the uplink data DAT3 and a queue delay time QL3 of the DAT3 to the base station AP on the basis of reception of the trigger frame TF (S31). In the present example, QL3 is longer than QLth (QL3 > QLth). When receiving DAT3 and QL3 successfully, the base station AP transmits an Ack to the wireless terminal apparatus WTA (S32). Then, the wireless terminal apparatus WTA discards DAT3 on the basis of reception of the Ack. Note that, in the processing related to reception of DAT3, the base station AP may adjust the TWT setting on the basis of QL3 > QLth, or may omit adjustment of the TWT setting on the basis of the fact that it is a TWT service period immediately after the TWT setting is updated.

In the present example, the wireless terminal apparatus WTA buffers uplink data DAT4 during the standby period WP of a TWT interval TI2 <1> (S33). Then, at the start time of a TWT interval TI2 <2>, the base station AP transmits the trigger frame TF to the wireless terminal apparatus WTA (S34). The wireless terminal apparatus WTA transmits the uplink data DAT4 and a queue delay time QL4 of the DAT4 to the base station AP on the basis of reception of the trigger frame TF (S35). In the present example, QL4 is shorter than QLth (QL4 < QLth). The previous update of the TWT setting changes the cycle of the TWT service period to be short, so that the queue delay time of the uplink data may be short in this way. When receiving DAT4 and QL4 successfully, the base station AP transmits an Ack to the wireless terminal apparatus WTA (S36). Then, the wireless terminal apparatus WTA discards DAT4 on the basis of reception of the Ack. Thereafter, similarly, the base station AP can receive uplink data of the wireless terminal apparatus WTA, for example, by using the TWT function while changing the TWT setting.

Note that the change of the TWT setting may be applied in the next TWT interval TI after the beacon signal notifying the change of the TWT setting is transmitted, or may be applied in the TWT interval TI after a predetermined cycle.

### <1-3> Advantageous effects of first embodiment

In data communication, when traffic is not stagnated, it is preferable to perform the power save operation on the link. However, when the period of the power save operation becomes long, there is a possibility that a delay in transmission of uplink data becomes large.

As a method of curbing delay of low latency data in the uplink, it is conceivable to allocate periodic uplink data transmission using the TWT function. Specifically, when uplink data is periodically input, it is preferable to match the cycle in which the uplink data is input with the cycle of the TWT service period. As a result, the delay time of the queue of the low latency data can be reduced, and the power consumption of the link can be curbed. However, when the TWT function is used, when the base station AP cannot know the input time and the input cycle of uplink data, the TWT cycle and the input timing of uplink data may not match. In this case, the use of the TWT function may increase the delay. That is, there is a possibility that low latency data cannot be transmitted within a desired delay time.

Therefore, the base station AP according to the first embodiment acquires the queue delay time QL for each data received from the wireless terminal apparatus WTA that exchanges low latency data. Then, in a case where the queue delay time QL exceeds the predetermined threshold QLth, the base station AP adjusts the TWT setting such that, for example, the TWT interval (TWT cycle) becomes short.

As a result, in the base station AP according to the first embodiment, even when the periodicity of uplink low latency data is uncertain, the TWT setting can be updated to match the data generation timing. Accordingly, since the base station AP according to the first embodiment can increase (adjust) the frequency at which low latency data is transmitted on the basis of the queue delay, it is possible to curb a queue delay of low latency data transmitted in the uplink.

### <1-4> Modification of first embodiment

In the first embodiment, the case where the base station AP notifies the wireless terminal apparatus WTA of the new TWT setting using a beacon has been exemplified, but the present invention is not limited thereto. The base station AP may add the information of the TWT setting to a wireless frame for transmitting the trigger frame TF and notify the wireless terminal apparatus WTA of the new TWT setting.

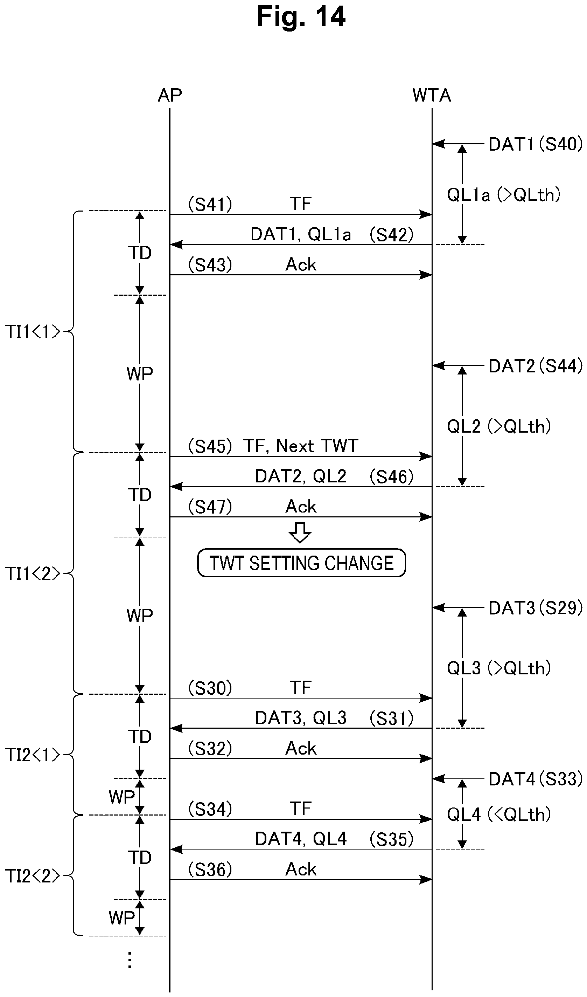

Fig. 14 is a sequence diagram illustrating a specific example of a TWT setting adjustment method in an information communication system 1 according to a modification of the first embodiment. The flowchart illustrated in Fig. 14 has a configuration in which the processing of S20 to S27 in the flowchart illustrated in Fig. 13 is replaced with the processing of S40 to S47, and the processing of S28 is omitted. Hereinafter, with reference to Fig. 14, differences from the first embodiment will be described regarding the method of updating the TWT setting in the modification of the first embodiment.

A wireless terminal apparatus WTA buffers uplink data DAT1 before a TWT interval TI1 <1> (S40). At the start time of the TWT interval TI1 <1>, a base station AP transmits a trigger frame TF to the wireless terminal apparatus WTA (S41). The wireless terminal apparatus WTA transmits the uplink data DAT1 and a queue delay time QLla of the DAT1 to the base station AP on the basis of reception of the trigger frame TF (S42). In the present example, QLla is longer than QLth (QL1a > QLth). When receiving DAT1 and QL1a successfully, the base station AP transmits an Ack to the wireless terminal apparatus WTA (S43). Then, the wireless terminal apparatus WTA discards DAT1 on the basis of reception of the Ack. In addition, the base station AP confirms that QLla > QLth in the processing related to reception of DAT1, and generates the next TWT setting. The next TWT setting is, for example, a setting in which the cycle (TWT cycle) of a TWT service period is shortened as in the first embodiment.

In the present example, the wireless terminal apparatus WTA buffers uplink data DAT2 during a standby period WP of the TWT interval TI1 <1> (S44). Then, at the start time of a TWT interval TI1 <2>, the base station AP transmits a wireless signal including the trigger frame TF and the next TWT setting (Next TWT) to the wireless terminal apparatus WTA (S45). The wireless terminal apparatus WTA transmits the uplink data DAT2 and a queue delay time QL2 of the DAT2 to the base station AP on the basis of reception of the trigger frame TF (S46). When receiving DAT2 and QL2 successfully, the base station AP transmits an Ack to the wireless terminal apparatus WTA (S47). Furthermore, the wireless terminal apparatus WTA applies the next TWT setting received in S45 to its own station. After the processing of S47, for example, similarly to the first embodiment, the processing of S29 to S36 is sequentially executed.

As described above, a link management unit MLD of the base station AP can notify the wireless terminal apparatus WTA of a cycle in which the wireless signal processing unit (for example, STA1) is caused to radiate the wireless signal including the trigger frame TF using the trigger frame to be radiated to the wireless signal processing unit after detecting that the queue delay time QL exceeds the threshold QLth.

As a result, the base station AP in the modification of the first embodiment can notify the wireless terminal apparatus WTA of the TWT setting without using a beacon, and the wireless terminal apparatus WTA can update the TWT setting. Accordingly, similarly to the first embodiment, the modification of the first embodiment can curb a queue delay of low latency data transmitted in the uplink. In addition, in the modification of the first embodiment, since the period required for the wireless terminal apparatus WTA to receive a beacon can be omitted, the power consumption of the wireless terminal apparatus WTA can be curbed as compared with the first embodiment.

### <2> Second embodiment

The configuration of an information communication system 1 according to a second embodiment is similar to that of the information communication system 1 according to the first embodiment. In the second embodiment, the TWT setting is managed for each group, and the TWT setting of each group is updated on the basis of a queue delay time QL. Hereinafter, the information communication system 1 according to the second embodiment will be described in terms of differences from the first embodiment.

### <2-1> TWT function

A base station AP according to the second embodiment sets a TWT group GR when establishing links with a plurality of wireless terminal apparatuses WTA and using the TWT function. The TWT group GR is a set of a plurality of wireless terminal apparatuses WTA using a common TWT setting. That is, in the second embodiment, a plurality of wireless terminal apparatuses WTA belonging to the same TWT group GR share the same TWT setting. Then, similarly to the first embodiment, the base station AP according to the second embodiment can adjust the TWT setting on the basis of the queue delay time QL acquired from each wireless terminal apparatus WTA. On the other hand, the base station AP according to the second embodiment applies the adjusted TWT setting to the TWT group GR instead of the wireless terminal apparatus WTA alone.

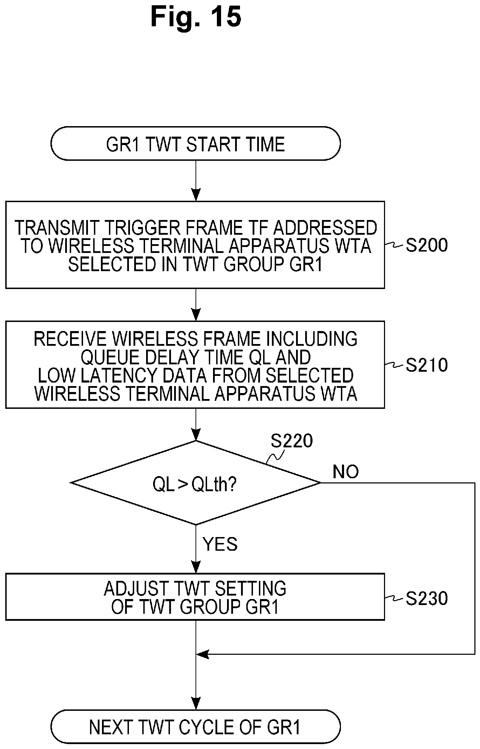

Fig. 15 is a flowchart illustrating one example of a method of updating the TWT setting in the information communication system 1 according to the second embodiment. Hereinafter, a method of updating the TWT setting in the second embodiment will be described with reference to Fig. 15 while focusing on the operation of the base station AP related to a TWT group GR1.

When a certain TWT cycle of the TWT group GR1 starts, the base station AP transmits a trigger frame TF addressed to the wireless terminal apparatus WTA selected in the TWT group GR (S200). The wireless terminal apparatus WTA that has received the trigger frame TF addressed to its own station transmits a wireless frame including the queue delay time QL and low latency data to the base station AP.

Next, the base station AP receives the wireless frame including the queue delay time QL and the low latency data from the selected wireless terminal apparatus WTA (S210).

Next, the base station AP determines whether "QL > QLth" is satisfied (S220). The method of setting QLth in the processing of S220 is similar to that of the first embodiment.

In the processing of S220, if "QL > QLth" is not satisfied (S220, NO), the base station AP proceeds to processing of the next TWT cycle without adjusting the TWT setting of the TWT group GR1.

If "QL > QLth" is satisfied in the processing of S220 (S220, YES), the base station AP adjusts the TWT setting of the TWT group GR1 (S230). The method of adjusting the TWT setting in the processing of S230 is similar to that of the first embodiment. If "QL > QLth" is satisfied, the base station AP sets a TWT interval to 1/2, for example. After updating the TWT setting, the base station AP proceeds to processing of the next TWT cycle.

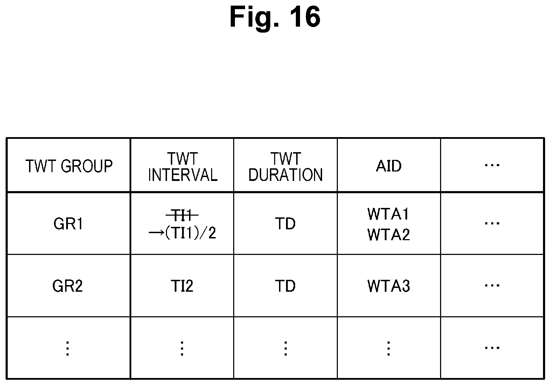

Fig. 16 is a table illustrating a change example of the TWT setting in the information communication system 1 according to the second embodiment. The table illustrated in Fig. 16 indicates the TWT interval, a TWT duration, and an AID set in each of the TWT groups GR1 and GR2, and the strikethrough and the arrow indicate before and after the update of the TWT setting. In the present example, wireless terminal apparatuses WTA1 and WTA2 are allocated to the TWT group GR1, and a TWT interval TI1 and a TWT duration TD are set. A wireless terminal apparatus WTA3 is allocated to the TWT group GR2, and a TWT interval TI2 and the TWT duration TD are set.

In the present example, when the update method of the TWT setting of the second embodiment is used, the TWT interval TI1 in the TWT group GR1 is changed to, for example, 1/2 (that is, (TI1)/2) on the basis of the fact that the queue delay time QL in the uplink data of the wireless terminal apparatus WTA1 or WTA2 exceeds QLth. Note that the TWT setting in a case where QL > QLth is confirmed may be set such that at least the TWT cycle becomes short.

### <2-2> Advantageous effects of second embodiment

The base station AP can facilitate management of the TWT function by managing the TWT setting in units of TWT groups GR. Ideally, the TWT setting applied to the TWT group GR is set in accordance with a timing or a cycle at which traffic is generated in each of the plurality of wireless terminal apparatuses WTA, and is set so as to accommodate all the traffic. However, the actual traffic also includes aperiodic traffic. Therefore, it is difficult to set the accuracy of the initial setting of the TWT function high in the TWT group GR to which the plurality of wireless terminal apparatuses WTA is allocated.

Therefore, when detecting low latency data (traffic) in which the queue delay time QL exceeds a threshold QLth, the base station AP according to the second embodiment shortens (for example, in half) the TWT cycle in the TWT group GR to which the transmission of the low latency data is allocated.

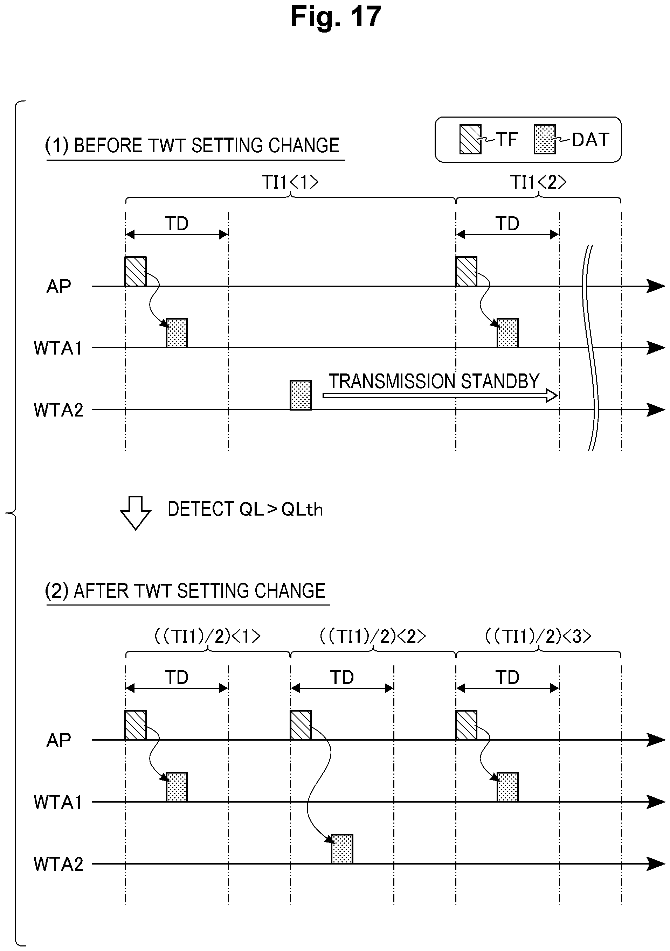

Fig. 17 is a timing chart illustrating one example of the uplink data transmission method before and after the change of the TWT setting in the information communication system 1 according to the second embodiment. (1) and (2) of Fig. 17 correspond to before and after the change of the TWT setting, respectively, and illustrate the traffic situations of the wireless terminal apparatuses WTA1 and WTA2 belonging to the same TWT group GR. The hatched box indicates the transmission timing of the trigger frame TF. The box to which dotted hatching is added indicates the transmission timing of traffic (data DAT). An arrow from the trigger frame TF to the data DAT indicates the data DAT to which a transmission opportunity is given by the trigger frame TF.

As illustrated in (1) of Fig. 17, the base station AP before the TWT setting change transmits the trigger frame TF in the TWT duration TD of each of the TWT intervals TI1 <1> and <2>. In the present example, the transmission cycle of the traffic of the wireless terminal apparatus WTA1 coincides with the TWT interval TI1. As a result, the wireless terminal apparatus WTA1 can transmit the traffic on the basis of the trigger frames TF of the TWT intervals TI1 <1> and <2>. On the other hand, the wireless terminal apparatus WTA2 has traffic generated in the TWT interval TI <1>, but cannot allocate a transmission opportunity, and a queue delay occurs (transmission standby in Fig. 17).

When detecting the occurrence of such a queue delay of the wireless terminal apparatus WTA2 by comparing the queue delay time QL with the threshold QLth (detect QL > QLth), the base station AP according to the second embodiment changes the TWT setting of the TWT group GR including the wireless terminal apparatus WTA2. In the present example, the TWT cycle of the TWT group GR is changed to half and is indicated as "TWT interval (TI1/2)".

As illustrated in (2) of Fig. 17, the base station AP after the TWT setting change transmits the trigger frame TF in the TWT duration TD of each of the TWT intervals ((TI1)/2) <1>, <2>, and <3>. Since the TWT cycle is set to half, the base station AP after the TWT setting change can allocate the transmission opportunity to both the traffic of the wireless terminal apparatus WTA1 and the traffic of the wireless terminal apparatus WTA2.

As described above, the base station AP according to the second embodiment can increase the opportunity to rescue the low-latency traffic exceeding the threshold QLth of the queue delay time QL when using the TWT function. Accordingly, the base station AP according to the second embodiment can curb a queue delay of low latency data transmitted in the uplink.

### <3> Third embodiment

The configuration of an information communication system 1 according to a third embodiment is similar to that of the information communication system 1 according to the first embodiment. In the third embodiment, the TWT setting is managed for each TWT group GR as in the second embodiment, and the TWT group GR to which the wireless terminal apparatus WTA belongs is changed on the basis of the queue delay time QL. Hereinafter, the information communication system 1 according to the third embodiment will be described in terms of differences from the first and second embodiments.

### <3-1> TWT function

A base station AP according to the third embodiment sets a plurality of TWT groups GR when establishing links with a plurality of wireless terminal apparatuses WTA and using the TWT function. Then, the base station AP applies different TWT settings to the plurality of TWT groups GR. The plurality of TWT groups GR set by the base station AP includes, for example, a TWT group GR having a long TWT interval and a TWT group GR having a short TWT interval.

Then, the base station AP according to the third embodiment changes the setting of the TWT group GR to which each wireless terminal apparatus WTA belongs on the basis of a queue delay time QL acquired from each wireless terminal apparatus WTA. For example, when detecting low latency data (traffic) in which the queue delay time QL exceeds a threshold QLth, the base station AP according to the third embodiment changes the allocation of the TWT group GR of the wireless terminal apparatus WTA to which the transmission of the low latency data is allocated to a TWT group GR having a TWT cycle shorter than that of the current TWT group GR.

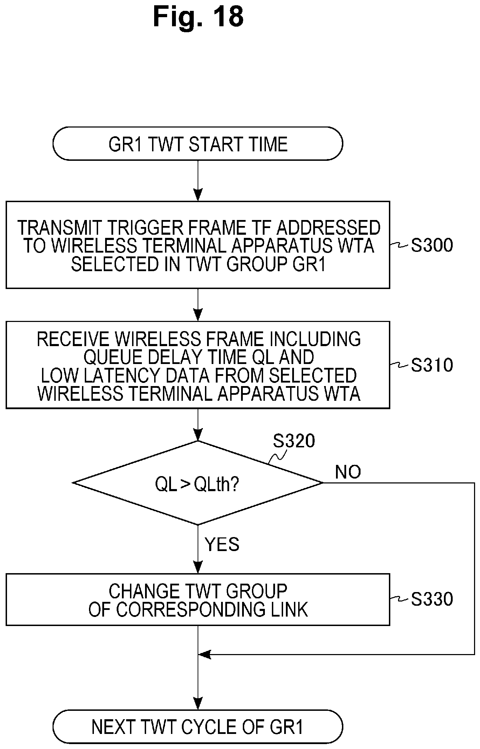

Fig. 18 is a flowchart illustrating one example of a method of updating the TWT setting in the information communication system 1 according to the third embodiment. Hereinafter, a method of updating the TWT setting in the third embodiment will be described with reference to Fig. 18 while focusing on the operation of the base station AP related to a TWT group GR1.

When a certain TWT cycle of the TWT group GR1 starts, the base station AP transmits a trigger frame TF addressed to the wireless terminal apparatus WTA selected in the TWT group GR (S300). The wireless terminal apparatus WTA that has received the trigger frame TF addressed to its own station transmits a wireless frame including the queue delay time QL and low latency data to the base station AP.

Next, the base station AP receives the wireless frame including the queue delay time QL and the low latency data from the selected wireless terminal apparatus WTA (S310).

Next, the base station AP determines whether "QL > QLth" is satisfied (S320). The method of setting QLth in the processing of S320 is similar to that of the first embodiment.

In the processing of S320, if "QL > QLth" is not satisfied (S320, NO), the base station AP proceeds to processing of the next TWT cycle without adjusting the TWT setting of the selected wireless terminal apparatus WTA.

If "QL > QLth" is satisfied in the processing of S320 (S320, YES), the base station AP changes the TWT group of the selected wireless terminal apparatus WTA (S330). For example, the base station AP changes the affiliation of the wireless terminal apparatus WTA satisfying "QL > QLth" to a TWT group having a narrower TWT interval (a shorter TWT cycle) than the current TWT group. After updating the TWT setting, the base station AP proceeds to processing of the next TWT cycle.

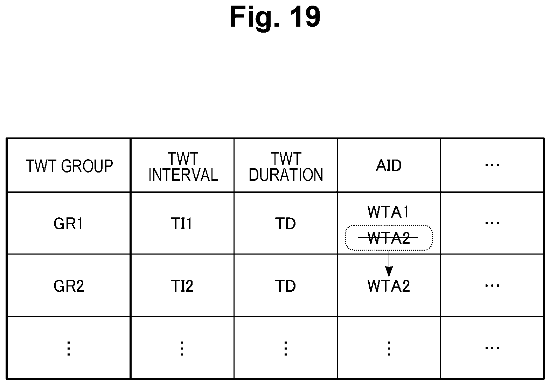

Fig. 19 is a table illustrating a change example of the TWT setting in the information communication system 1 according to the third embodiment. The table illustrated in Fig. 19 indicates the TWT interval, a TWT duration, and an AID set in each of the TWT groups GR1 and GR2, and the strikethrough and the arrow indicate before and after the update of the TWT setting. In the present example, a wireless terminal apparatus WTA1 is allocated to the TWT group GR1, and a TWT interval TI1 and a TWT duration TD are set. A wireless terminal apparatus WTA2 is allocated to the TWT group GR2, and a TWT interval TI2 and the TWT duration TD are set. The TWT groups GR1 and GR2 are set to have different TWT service cycles. The TWT interval TI2 is set to, for example, half of the TWT interval TI1.

In the present example, when the update method of the TWT setting of the third embodiment is used, for example, the wireless terminal apparatus WTA2 belonging to the TWT group GR1 is changed from the TWT group GR1 to the TWT group GR2 having a TWT cycle shorter than that of the TWT group GR1 on the basis of the fact that the queue delay time QL in the uplink data of the wireless terminal apparatus WTA2 exceeds QLth. Note that as the TWT group GR after the change, at least a TWT group GR having a TWT cycle shorter than that of the TWT group GR before the change may be selected.

### <3-2> Advantageous effects of third embodiment>

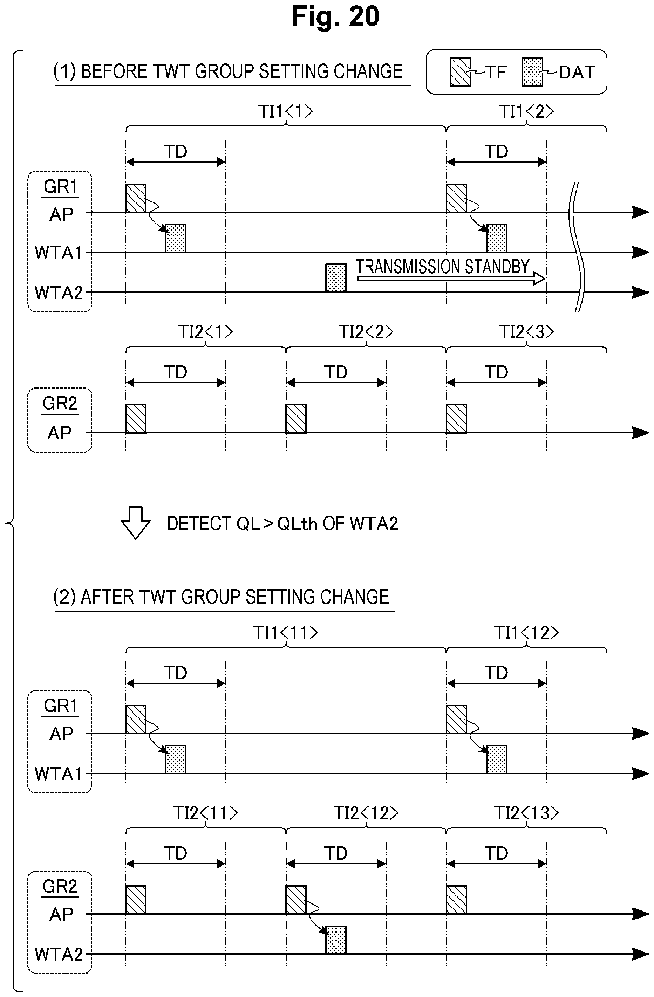

Fig. 20 is a timing chart illustrating one example of the uplink data transmission method before and after the change of the TWT setting in the information communication system according to the third embodiment. (1) and (2) of Fig. 20 correspond to before and after the change of the TWT setting, respectively, and illustrate the traffic situations of the wireless terminal apparatuses WTA belonging to the TWT groups GR1 and GR2. The hatched box indicates the transmission timing of the trigger frame TF. The box to which dotted hatching is added indicates the transmission timing of traffic (data DAT). An arrow from the trigger frame TF to the data DAT indicates the data DAT to which a transmission opportunity is given by the trigger frame TF.

As illustrated in (1) of Fig. 20, the base station AP before the TWT setting change may transmit the trigger frame TF in the TWT duration TD of each of the TWT intervals TI1 <1> and <2> of the TWT group GR1. In the present example, the wireless terminal apparatus WTA1 can transmit the traffic on the basis of the trigger frames TF of the TWT intervals TI1 <1> and <2>. On the other hand, the wireless terminal apparatus WTA2 has traffic generated in the TWT interval TI <1>, but cannot allocate a transmission opportunity, and a queue delay occurs (transmission standby in Fig. 20). In addition, the base station AP before the TWT setting change can transmit the trigger frame TF in each of the TWT intervals TI2 <1>, <2>, and <3> in the TWT group GR2.

When detecting the occurrence of such a queue delay of the wireless terminal apparatus WTA2 by comparing the queue delay time QL with the threshold QLth (detect QL > QLth), the base station AP according to the third embodiment changes the affiliation of the TWT group GR of the wireless terminal apparatus WTA2. In the present example, the affiliation of the wireless terminal apparatus WTA2 belonging to the TWT group GR1 is changed to the TWT group GR2 having a TWT cycle that is half of the TWT group GR1.

As illustrated in (2) of Fig. 20, the base station AP after the TWT setting change can transmit the trigger frame TF in the TWT duration TD of each of the TWT intervals TI1 <11> and <12> of the TWT group GR1 and give a transmission opportunity to each traffic of the wireless terminal apparatus WTA1. Then, the base station AP after the TWT setting change can transmit the trigger frame TF in each of the TWT intervals TI2 <11>, <12>, and <13> and give a transmission opportunity to each traffic of the wireless terminal apparatus WTA2.

As described above, the base station AP according to the third embodiment can increase the opportunity to rescue the low-latency traffic exceeding the threshold QLth of the queue delay time QL when using the TWT function, similarly to the second embodiment. Accordingly, the base station AP according to the third embodiment can curb a queue delay of low latency data transmitted in the uplink.

### <4> Fourth embodiment

The configuration of an information communication system 1 according to a fourth embodiment is similar to that of the information communication system 1 according to the first embodiment. In the fourth embodiment, multilink is used for wireless connection between a base station AP and a wireless terminal apparatus WTA, the TWT setting is managed for each TWT group GR similarly to the second embodiment, and the TWT group GR and one or more channels are managed in association with each other. Hereinafter, the information communication system 1 according to the fourth embodiment will be described in terms of differences from the first to third embodiments.

### <4-1> Multilink

The multilink is a wireless connection in which data can be transmitted and received using a plurality of links. In a case where the multilink is used, each of the base station AP and the wireless terminal apparatus WTA includes a plurality of STA functions (wireless signal processing units). In a multilink, two or more channels CH are used. The plurality of channels CH used in a multilink may be the same frequency band or different frequency bands.

### (One example of link state)

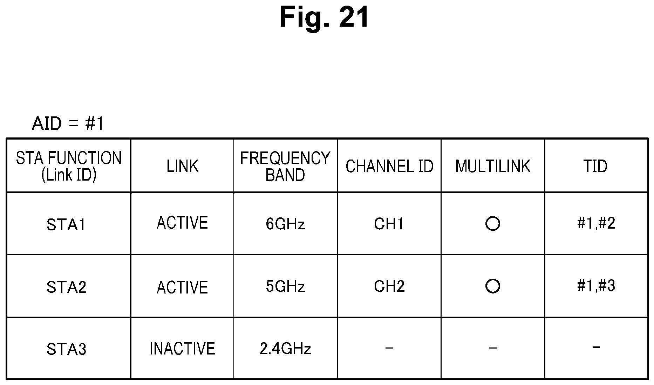

Fig. 21 is a table illustrating one example of link management information 131 held by the base station AP included in the information communication system 1 according to the fourth embodiment. Fig. 21 illustrates a link state related to a wireless terminal apparatus WTA having the AID = #1. As illustrated in Fig. 21, link management information 131 includes, for example, information regarding each of "STA function", "link", "frequency band", "channel ID", "multilink", and "traffic identifier (TID)".

"STA function" indicates a link identifier (Link ID) associated with the STA function. In the present example, three STA functions (STA1, STA2, and STA3) are allocated to the wireless communication between the wireless terminal apparatus WTA having the AID = #1 and the base station AP.

"Link" indicates whether or not a link is established. In the present example, it is indicated that each of STA1 and STA2 has an established link ("active" in Fig. 21), and it is indicated that STA3 does not have an established link ("inactive" in Fig. 21).

"Frequency band" indicates a frequency band used for the link. In the present example, the 6 GHz band, the 5 GHz band, and the 2.4 GHz band are allocated to STA1, STA2, and STA3, respectively.

"Channel ID" indicates an ID of a channel used for a link. In the present example, channel CH1 of the 6 GHz band is allocated to STA1, and channel CH2 of the 5 GHz band is allocated to STA2.

"Multilink" indicates whether or not multilink is established. In the present example, a set of STA1 and STA2 establishes a multilink ("∘" in Fig. 21).

"TID" indicates the traffic type allocated to the link (STA function). Each of #1 to # 3 entered in "TID" of Fig. 21 corresponds to any of VO, VI, BE, BK, and LL. In the present example, TID #1 is allocated to STA and STA2, TID #2 is allocated to STA1, and TID #3 is allocated to STA2. As described above, in the multilink, one or a plurality of STA functions can be allocated to one TID. For example, the association between the traffic and the STA function is set such that a traffic amount (data amount) is equal among a plurality of links forming the multilink. The present invention is not limited thereto, and traffic of similar types (priority/non-priority and the like) may be collected in a specific link included in the multilink.

Note that link management information 231 held by the wireless terminal apparatus WTA can include, for example, information similar to the information illustrated in Fig. 21. A link control unit 134 of the base station AP can determine the association between the TID and the STA function when establishing multilink. A link control unit 234 of the wireless terminal apparatus WTA can determine the association between the TID and the STA function when establishing multilink. A MAC frame processing unit 140 of the base station AP can then refer to the link management information 131 to identify a link associated with a TID of data included in the MAC frame. A MAC frame processing unit 240 of the wireless terminal apparatus WTA can refer to the link management information 231 to identify a link associated with a TID of data included in the MAC frame.

### (Multilink setup method)

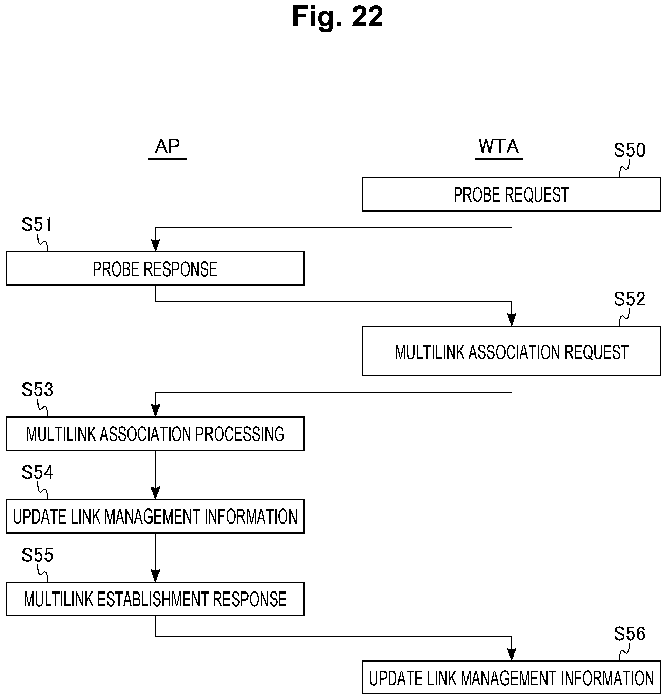

Fig. 22 is a flowchart illustrating one example of a multilink setup method in the information communication system 1 according to the fourth embodiment. A multilink setup method will be described below with reference to Fig. 22. The multilink setup is executed between the link management unit MLD of the base station AP and the link management unit MLD of the wireless terminal apparatus WTA using, for example, a management frame.

In the processing of S50, the wireless terminal apparatus WTA transmits (broadcasts) a probe request to the base station AP. The probe request is a signal for confirming whether or not the base station AP exists around the wireless terminal apparatus WTA. When receiving the probe request, the base station AP executes processing of S51.

In the processing of S51, the base station AP transmits a probe response to the wireless terminal apparatus WTA. The probe response is a signal used for a response to a probe request from the wireless terminal apparatus WTA, and includes information necessary for establishing multilink. When receiving the probe response, the wireless terminal apparatus WTA executes processing of S52.

In the processing of S52, the wireless terminal apparatus WTA transmits a multilink association request to the base station AP via any STA function of the wireless terminal apparatus WTA. The multilink association request is a signal for requesting the base station AP to establish multilink, and includes information for multilink connection. When receiving the multilink association request, the link management unit MLD of the base station AP executes processing of S53.

In the processing of S53, the link management unit MLD of the base station AP executes multilink association processing. In the multilink association processing, the base station AP first executes association processing of the first STA function with the wireless terminal apparatus WTA. Then, when the wireless connection (link) is established in the first STA function, the link management unit MLD of the base station AP executes association processing of the second STA function using the first STA function for which the link has been established. When the association processing of at least two STA functions is completed, the base station AP recognizes that a multilink with the wireless terminal apparatus WTA has been established, and executes processing of S54.

In the processing of S54, the link management unit MLD of the base station AP updates the link management information 131. When the link management information 131 is updated, the base station AP executes processing of S55.

In the processing of S55, the base station AP transmits a multilink establishment response to the wireless terminal apparatus WTA. The multilink establishment response is a signal used for a response to the multilink request from the wireless terminal apparatus WTA. The link management unit MLD of the wireless terminal apparatus WTA recognizes that the multilink with the base station AP has been established on the basis of reception of the multilink establishment response, and executes processing of S56.

In the processing of S56, the link management unit MLD of the wireless terminal apparatus WTA updates the link management information 231. As a result, link management information is updated in both the base station AP and the wireless terminal apparatus WTA, and the multilink setup is completed. Thereafter, the base station AP and the wireless terminal apparatus WTA can execute data communication using the multilink.

Note that the multilink setup may be executed on the basis of a beacon periodically transmitted by the base station AP. In this case, the wireless terminal apparatus WTA executes the processing of S52 on the basis of reception of the beacon. That is, the processing of S50 and S51 can be omitted. In addition, at the time of setting up the multilink, the link management unit MLD of each of the base station AP and the wireless terminal apparatus WTA executes mapping between each link included in the multilink and the traffic type (TID). Specifically, the link management unit MLD of the wireless terminal apparatus WTA determines association between traffic and a link, and requests the link management unit MLD of the base station AP to apply the association. Then, when the wireless terminal apparatus WTA receives a positive response to the request from the base station AP, the association between the traffic and the link is confirmed.

### <4-2> TWT function

A base station AP according to the fourth embodiment sets a plurality of TWT groups GR when establishing links with a plurality of wireless terminal apparatuses WTA and using the TWT function. Then, the base station AP applies different TWT settings to the plurality of TWT groups GR. In addition, the base station AP according to the fourth embodiment manages the TWT group GR and one or more channels in association with each other. Then, the wireless terminal apparatus WTA can transmit low latency data using some or all of the channels of the TWT group GR to which the low latency data (traffic) is allocated.

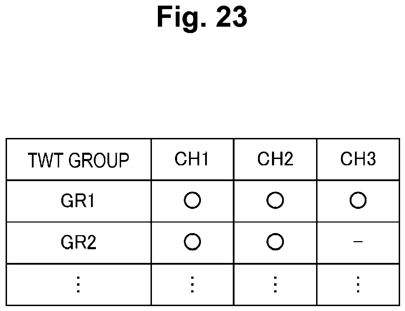

Fig. 23 is a table illustrating one example of the TWT setting in the information communication system 1 according to the fourth embodiment. In the table illustrated in Fig. 23, the channels allocated to the TWT groups GR1 and GR2 are indicated by "∘" provided in the drawing. In the present example, channels CH1, CH2, and CH3 are allocated to a TWT group GR1, and channels CH1 and CH2 are allocated to a TWT group GR2. The base station AP can transmit a trigger frame TF and the like for all of the associated channels CH in accordance with the TWT cycle of each TWT group GR.

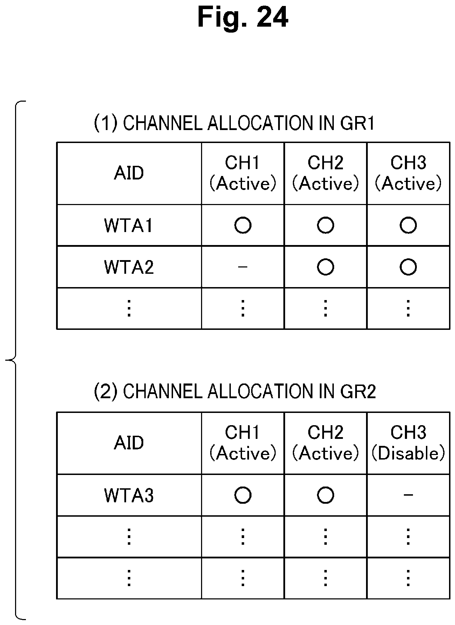

Fig. 24 is a table illustrating one example of channel allocation of each TWT group in the information communication system 1 according to the fourth embodiment. The tables illustrated in (1) and (2) of Fig. 24 correspond to channel allocations in the TWT groups GR1 and GR2, respectively, and the channels allocated to the wireless terminal apparatus WTA under the conditions illustrated in Fig. 23 are indicated by "∘" provided in the drawings. "Active" indicates that use of the channel CH is allocated to the TWT group GR. "Disable" indicates that the use of the channel CH is not allocated to the TWT group GR.

In the present example, as illustrated in (1) of Fig. 24, wireless terminal apparatuses WTA1 and WTA2 are allocated to the TWT group GR1. Then, use of the channels CH1, CH2, and CH3 is allocated to the wireless terminal apparatus WTA1, and use of the channels CH2 and CH3 is allocated to the wireless terminal apparatus WTA2. As illustrated in (2) of Fig. 24, a wireless terminal apparatus WTA3 is allocated to the TWT group GR2. Then, use of the channels CH1 and CH2 is allocated to the wireless terminal apparatus WTA3.

That is, the wireless terminal apparatus WTA1 can transmit data and the like to the base station AP using all of the channels CH1, CH2, and CH3 allocated to the TWT group GR1. The wireless terminal apparatus WTA2 can transmit data and the like to the base station AP using only the channels CH2 and CH3 among the channels CH1, CH2, and CH3 allocated to the TWT group GR1. The wireless terminal apparatus WTA3 can transmit data and the like to the base station AP using all of the channels CH1 and CH2 allocated to the TWT group GR2.

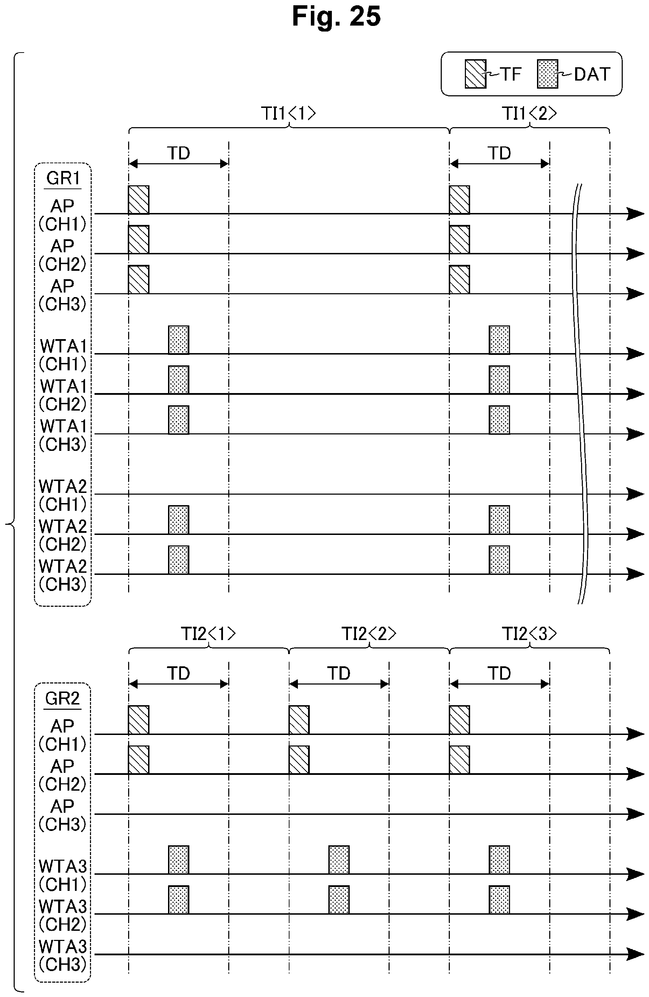

Fig. 25 is a timing chart illustrating one example of the uplink data transmission method based on the TWT setting in the information communication system 1 according to the fourth embodiment. Fig. 25 illustrates timings at which the wireless terminal apparatuses WTA1, WTA2, and WTA3 can transmit traffic. The hatched box indicates the transmission timing of the trigger frame TF. The box to which dotted hatching is added indicates the transmission timing of traffic (data DAT).

As illustrated in Fig. 25, the base station AP can transmit the trigger frame TF using each of the channels CH1, CH2, and CH3 in each of the TWT intervals TI1 <1> and <2> of the TWT group GR1. The wireless terminal apparatus WTA1 of the TWT group GR1 can transmit the traffic to the base station AP using each of the channels CH1, CH2, and CH3 in each TWT interval TI1. The wireless terminal apparatus WTA2 of the TWT group GR1 can transmit the traffic to the base station AP using each of the channels CH2 and CH3 in each TWT interval TI1. On the other hand, the base station AP can transmit the trigger frame TF using each of the channels CH1 and CH2 in each of the TWT intervals TI2 <1>, <2>, and <3> of the TWT group GR2. The wireless terminal apparatus WTA3 of the TWT group GR2 can transmit the traffic to the base station AP using each of the channels CH2 and CH3 in each TWT interval TI2.

Note that the channel used by the wireless terminal apparatus WTA may be determined by the base station AP or may be determined by the wireless terminal apparatus WTA. In a case where the base station AP determines the channel, the base station AP may notify the wireless terminal apparatus WTA of the channel to be used by the trigger frame TF or may notify the wireless terminal apparatus WTA of the channel by a beacon. In a case where the wireless terminal apparatus WTA determines the channel, the wireless terminal apparatus WTA notifies (transmits) the base station AP of information on the channel to be used, for example, using the allocated TWT service period.

### <4-3> Advantageous effects of fourth embodiment

As described above, the base station AP according to the fourth embodiment manages the TWT setting for each TWT group GR. Then, one or more channels among a plurality of channels allocated to the associated TWT group GR can be allocated to each wireless terminal apparatus WTA. That is, the correspondence between the TWT group GR and the channel is uniquely determined between the base station AP and the wireless terminal apparatus WTA according to the fourth embodiment.

As a result, the base station AP according to the fourth embodiment can easily manage the setting of each channel of each wireless terminal apparatus WTA. Furthermore, the base station AP according to the fourth embodiment allows the use of some channels for each wireless terminal apparatus WTA with respect to the channels associated with the TWT group GR, thereby being able to secure the flexibility of the uplink data transmission on the wireless terminal apparatus WTA side.

### <5> Others

The configuration and functional configuration of the information communication system 1 according to the embodiment may be other configurations. For example, a case where each of the base station AP and the wireless terminal apparatus WTA has three STA functions (wireless signal processing units) has been exemplified, but the present invention is not limited thereto. The base station AP only needs to include at least one wireless signal processing unit. Similarly, the wireless terminal apparatus WTA only needs to include at least one wireless signal processing unit. The number of channels that can be processed by the STA function can be appropriately set according to the frequency band to be used. Each of the wireless communication modules 13 and 23 may correspond to wireless communication of a plurality of frequency bands by a plurality of communication modules, or may correspond to wireless communication of a plurality of frequency bands by one communication module. The functional configurations of the base station AP and the wireless terminal apparatus WTA may have other names and be grouped in other ways as long as the operations described in the embodiment can be executed.

In the information communication system 1 according to the embodiment, each of the CPU 10 included in the base station AP and the CPU 20 included in the wireless terminal apparatus WTA may be another circuit. For example, each of the base station AP and the wireless terminal apparatus WTA may include a micro processing unit (MPU) or the like instead of the CPU. Each of the processing described in the embodiment may be implemented by dedicated hardware. The processing of each of the base station AP and the wireless terminal apparatus WTA may include processing executed by software and processing executed by hardware in combination or may include only one of the processing.

The base station AP using the TWT setting update method of the third embodiment may include the operation described in this paragraph. The link management unit MLD of the base station AP generates the trigger frame TF radiated in the first cycle for the wireless terminal apparatus of the first group including the wireless terminal apparatus WTA1. Then, the link management unit MLD of the base station AP generates the trigger frame radiated in the second cycle different from the first cycle for the wireless terminal apparatus of the second group. Then, in a case where the uplink data and the information of the queue delay time of the uplink data are received from the wireless terminal apparatus WTA1 in response to the trigger frame TF included in the set of trigger frames radiated in the first cycle, and the queue delay time exceeds a predetermined threshold value, the allocation of the TWT group to the wireless terminal apparatus WTA1 is changed from the first group to the second group.

The base station AP using the TWT setting in the fourth embodiment may include the configuration described in this paragraph together with the contents of the preceding paragraph. The link management unit MLD of the base station AP allocates the first wireless signal processing unit (for example, STA1) and the second wireless signal processing unit (for example, STA2) to the radiation of the wireless signal including the trigger frame TF corresponding to the first group, and allocates one or more wireless signal processing units of the first wireless signal processing unit (for example, STA1) and the second wireless signal processing unit (for example, STA2) to the communication with each of the wireless terminal apparatus WTA1 and the wireless terminal apparatus WTA2. Note that the allocation of communication with each of the wireless terminal apparatus WTA1 and the wireless terminal apparatus WTA2 can be managed in units of channels allocated to the STA function. Then, in the fourth embodiment, the number of channels allocated to each of the wireless terminal apparatuses WTA1 and WTA2 belonging to the same TWT group GR may be different.

In the embodiment, the flowchart used to describe the operation is merely one example. Each operation described in the embodiment may be interchanged within a possible processing order, or other processing may be added. For example, the multilink setup method described in the first embodiment is merely one example. Furthermore, the format of a wireless frame described in the first embodiment is merely one example. In the information communication system 1, other formats may be used as long as the operations described in the embodiment can be executed. A wireless communication standard different from the IEEE 802.11 standard may be used as the wireless communication between the base station AP and the wireless terminal apparatus WTA.

Note that the present invention is not limited to the above embodiment and various modifications may be made in the implementation stage without departing from the gist of the invention. In addition, the embodiments may be appropriately combined and implemented, and in this case, combined effects can be obtained. Furthermore, the above embodiments include various inventions, and various inventions can be extracted by combinations selected from a plurality of disclosed components. For example, in a case where the problems can be solved and the advantageous effects can be obtained even if some components are deleted from all the components described in the embodiments, a configuration from which the components are deleted can be extracted as an invention.

### Reference Signs List

- AP: Base station
- WTA: Wireless terminal apparatus
- 1: Information communication system
- 10: CPU
- 11: ROM
- 12: RAM
- 13: Wireless communication module
- 14: Wired communication module
- 110: LLC processing unit
- 120: Data processing unit
- 130: Management unit
- 131: Link management information
- 132: Association processing unit
- 133: Authentication processing unit
- 134: Link control unit
- 135: Beacon management unit
- 136: Trigger generation unit
- 137: Delay determination unit
- 140: MAC frame processing unit
- 141: Classification unit
- 142: Transmission queue
- 143: Carrier sensing execution unit
- 144: Collision management unit
- 150: Wireless signal processing unit
- 20: CPU
- 21: ROM
- 22: RAM
- 23: Wireless communication module
- 24: Display
- 25: Storage
- 200: Application execution unit
- 210: LLC processing unit
- 220: Data processing unit
- 230: Management unit
- 231: Link management information
- 232: Association processing unit
- 233: Authentication processing unit
- 234: Link control unit
- 235: Beacon management unit
- 236: Delay measurement unit
- 240: MAC frame processing unit
- 241: Classification unit
- 242: Transmission queue
- 243: Carrier sensing execution unit
- 244: Collision management unit
- 250: Wireless signal processing unit

## Claims

1. A base station comprising:
a first wireless signal processing unit; and
a link management unit that establishes a link with a first wireless terminal apparatus by using the first wireless signal processing unit, wherein
the link management unit
causes the first wireless signal processing unit to radiate a wireless signal including a trigger frame in a first cycle, and
in response to a first trigger frame included in a set of the trigger frames radiated in the first cycle, receives first uplink data and information of a first queue delay time of the first uplink data from the first wireless terminal apparatus, and changes the cycle for causing the first wireless signal processing unit to radiate a wireless signal including the trigger frame from the first cycle to a second cycle shorter than the first cycle in a case where the first queue delay time exceeds a first threshold.

2. The base station according to claim 1, wherein
the link management unit uses a beacon to notify the first wireless terminal apparatus of a cycle for causing the first wireless signal processing unit to radiate the trigger frame.

3. The base station according to claim 1, wherein
the link management unit uses a second trigger frame to be radiated by the first wireless signal processing unit after detecting that the first queue delay time exceeds the first threshold to notify the first wireless terminal apparatus of a cycle for causing the first wireless signal processing unit to radiate a wireless signal including the trigger frame.

4. The base station according to claim 1, wherein
the link management unit
establishes a link with a second wireless terminal apparatus by using the first wireless signal processing unit,
generates the trigger frame to be radiated in the first cycle for a wireless terminal apparatus of a first group including the first wireless terminal apparatus and the second wireless terminal apparatus, and
in response to a trigger frame included in the set, receives information of a queue delay time from each of the first wireless terminal apparatus and the second wireless terminal apparatus, and changes a cycle for causing the first wireless signal processing unit to radiate a wireless signal including the trigger frame from the first cycle to a third cycle shorter than the first cycle in a case where the queue delay time exceeds a second threshold.

5. The base station according to claim 1, wherein
the link management unit
generates the trigger frame to be radiated in the first cycle for a wireless terminal apparatus of a first group including the first wireless terminal apparatus,
generates a trigger frame to be radiated in a fourth cycle different from the first cycle for a wireless terminal apparatus of a second group, and
in response to a trigger frame included in the set, receives second uplink data and information of a second queue delay time of the second uplink data from the first wireless terminal apparatus, and changes allocation of a group to the first wireless terminal apparatus from the first group to the second group in a case where the second queue delay time exceeds a second threshold.

6. The base station according to claim 5, further comprising
a second wireless signal processing unit, wherein
the link management unit allocates the first wireless signal processing unit and the second wireless signal processing unit to radiation of a wireless signal including the trigger frame corresponding to the first group, and allocates one or more wireless signal processing units of the first wireless signal processing unit and the second wireless signal processing unit to communication with each of the first wireless terminal apparatus and the second wireless terminal apparatus, and
the number of wireless signal processing units allocated to the first wireless terminal apparatus is different from the number of wireless signal processing units allocated to the second wireless terminal apparatus.

7. A wireless terminal apparatus comprising:
a wireless signal processing unit; and
a link management unit that establishes a link with a base station using the wireless signal processing unit, wherein
the link management unit
transmits uplink data and information of a queue delay time of the uplink data to the base station using the wireless signal processing unit on the basis of reception of a trigger frame addressed to the wireless terminal apparatus from the base station by the wireless signal processing unit.

8. The wireless terminal apparatus according to claim 7, wherein
the link management unit brings the wireless signal processing unit into a state capable of receiving a wireless signal from the base station in accordance with a transmission cycle of the trigger frame on the basis of reception of information on the transmission cycle from the base station by the wireless signal processing unit.
